(19) Europäisches Patentamt / European Patent Office / Office européen des brevets

(11) **EP 2 090 454 B1**

(12) **EUROPEAN PATENT SPECIFICATION**

| | |
|---|---|
| (45) Date of publication and mention of the grant of the patent:<br>**05.12.2012 Bulletin 2012/49** | (51) Int Cl.:<br>*B60K 17/342* (2006.01)  *F16H 57/00* (2012.01)<br>*F16H 61/662* (2006.01)  *B60W 30/20* (2006.01)<br>*B60W 10/107* (2012.01)  *B60W 10/119* (2012.01)<br>*B60W 10/101* (2012.01)  *B60W 30/184* (2012.01)<br>*B60K 23/08* (2006.01)  *F16H 7/08* (2006.01)<br>*F16H 59/72* (2006.01) |
| (21) Application number: **09250350.7** | |
| (22) Date of filing: **12.02.2009** | |

(54) **Control apparatus and method for four-wheel drive vehicle**

Steuervorrichtung und Verfahren für Fahrzeug mit Allradantrieb

Appareil de commande et procédé pour véhicule à quatre roues motrices

(84) Designated Contracting States:
**DE FR GB**

(30) Priority: **14.02.2008 JP 2008033659**

(43) Date of publication of application:
**19.08.2009 Bulletin 2009/34**

(73) Proprietor: **Toyota Jidosha Kabushiki Kaisha**
**Toyota-shi, Aichi-ken 471-8571 (JP)**

(72) Inventors:
• **Tawara, Masahiro**
c/o Toyota Jidosha Kabushiki Kaisha
Toyota-shi
Aichi-ken, 471-8571 (JP)

• **Yamaguchi, Kenichi**
c/o Toyota Jidosha Kabushiki Kaisha
Toyota-shi
Aichi-ken, 471-8571 (JP)

(74) Representative: **Albutt, Anthony John**
D Young & Co LLP
120 Holborn
London EC1N 2DY (GB)

(56) References cited:
DE-A1- 10 164 490    JP-A- 62 147 154
JP-A- 2006 220 259    US-A1- 2006 058 128

EP 2 090 454 B1

**Description**

BACKGROUND OF THE INVENTION

1. Field of the Invention

The invention relates to a control apparatus and method for a four-wheel drive vehicle provided with a belt-type transmission and a driving torque distributing apparatus capable of switching the vehicle between two-wheel drive and four-wheel drive. More particularly, the invention relates to technology related to reducing a muffled sound when the vehicle is in four-wheel drive.

2. Description of the Related Art

In recent years, many vehicular drive apparatuses including belt-type transmissions have come to be used as automatic transmissions. These belt-type transmissions include, for example, a pair of pulleys and a belt that is wound around the pair of pulleys. One of the pulleys is provided on the input side and the other pulley is provided on the output side. The width of the groove of each pulley is able to be changed. The speed ratio of the transmission is able to be changed by changing the widths of the grooves of the pulleys. This belt-type transmission enables the speed ratio of the transmission to be changed continuously (i.e., in a non-stepped manner) according to the operating state of the vehicle, thus enabling the engine to operate with good combustion efficiency.

On the other hand, there are also many vehicular drive apparatuses that are provided with a driving torque distributing apparatus capable of switching the vehicle between two-wheel drive in which the vehicle is driven by either the front wheels or the rear wheels, and four-wheel drive in which the vehicle is driven by both the front wheels and the rear wheels, by controlling the distribution of torque (i.e., driving force), which is generated by a driving force source, input to the front and rear wheels. With a vehicular drive apparatus that includes this driving torque distributing apparatus, the vehicle is placed in four-wheel drive or the distribution of torque input to the front and rear wheels is controlled according to the driving state of the vehicle, which improves the driving performance of the vehicle, as well as achieves better fuel efficiency compared to when the vehicle is always in four-wheel drive.

Japanese Patent Application Publication No. 2006-220259 (JP-A-2006-220259), discloses a control apparatus for a four wheel drive vehicle comprising the features of the preamble of claim 1, and describes technology in which a belt-type transmission is provided in a four-wheel drive vehicle that can switch between two-wheel drive and four-wheel drive.

In JP-A-2006-220259, the belt is prevented from slipping by changing the amount of belt squeezing force of the belt-type transmission so that it is different when the vehicle is in two-wheel drive than it is when the vehicle is in four-wheel drive.

In this belt-type transmission, there is a portion of the belt that is not in contact with either of the pulleys, and this portion may vibrate (i.e., string vibration). Meanwhile, in a vehicle that can be switched between two-wheel drive and four-wheel drive, the drive-line downstream of the driving torque distributing apparatus, when viewed from the driving force source, has a natural frequency.

When a certain relationship is established between the frequency of the string vibration and the natural frequency of the drive-line downstream of the driving torque distributing apparatus when the vehicle is in four-wheel drive, the belt of the belt-type transmission and the drive-line downstream of the driving torque distributing apparatus resonate. At this time, this resonance also causes the differential gear unit, which distributes driving force to the left and right wheels and is part of the drive-line downstream of the driving torque distributing apparatus, to vibrate violently. The differential gear unit is housed in a case which is mounted to the floor of the vehicle via vibration-proofing material such as a rubber cushion or the like, for example. As a result, the vibration of this differential gear unit may travel through the floor and produce a muffled sound. In particular, when the distribution ratio of torque to wheels other than the driven wheels is increased from the state of the vehicle in two-wheel drive, the compelling force applied to the differential gear unit increases. As a result, resonance tends to be generated.

SUMMARY OF THE INVENTION

This invention thus provides a control apparatus and method for a vehicle, which suppresses a muffled sound from being produced by preventing resonance between a belt of a belt-type transmission and a drive-line downstream of a driving torque distributing apparatus.

A first aspect of the invention relates to a control apparatus and method for a four-wheel drive vehicle provided with a driving torque distributing apparatus that switches the vehicle between two-wheel drive in which the vehicle is driven by one of a pair of front wheels or a pair of rear wheels and four-wheel drive in which the vehicle is driven by both the front wheels and the rear wheels, by controlling the distribution of driving torque transmitted through a belt-type transmission to the front wheels and the rear wheels. This control apparatus includes i) muffled sound determining means for, when the vehicle has been placed in four-wheel drive by the driving torque distributing apparatus, determining whether the running state of the vehicle is a muffled sound producing state brought about by vibration of a differential gear unit included in a drive-line downstream of the driving torque distributing apparatus due to string vibration of a drive belt of the belt-type transmission, and ii) tension changing means for changing the tension on the drive belt when it is determined by the muffled sound determining means that the running state of the vehicle is the muffled sound producing state, compared to when the running state of the vehicle is not the muffled sound producing state. The control method includes the steps of i) determining whether the running state of the vehicle is a muffled sound producing state brought about by vibration of a differential gear unit included in a drive-line downstream of the driving torque distributing apparatus due to string vibration of a drive belt of the belt-type transmission, when the vehicle has been placed in four-wheel drive by the driving torque distributing apparatus, and ii) changing the tension on the drive belt when it is determined that the running state of the vehicle is the muffled sound producing state, compared to when the running state of the vehicle is not the muffled sound producing state.

Accordingly, it is determined first whether the running state of the vehicle is a muffled sound producing state in which a muffled sound from vibration of the differential gear unit in the drive-line downstream of the driving torque distributing apparatus is being produced or may be produced, when the vehicle has been placed in four-wheel drive by the driving torque distributing apparatus. Then, if it is determined that the running state of the vehicle is the muffled sound producing state, the tension of the drive belt of the belt-type transmission is changed, compared to when the running state of the vehicle does not correspond to the muffled sound producing state. As a result, the frequency of the string vibration of the drive belt changes, thus eliminating a resonance relationship with the natural frequency of the drive-line downstream of the driving torque distributing apparatus, such that the muffled sound is reduced.

A second aspect of the invention relates to a control apparatus and method for a four-wheel drive vehicle provided with a driving torque distributing apparatus that switches the vehicle between two-wheel drive in which the vehicle is driven by one of a pair of front wheels or a pair of rear wheels and four-wheel drive in which the vehicle is driven by both the front wheels and the rear wheels, by controlling the distribution of driving torque transmitted through a belt-type transmission to the front wheels and the rear wheels. This control apparatus includes i) muffled sound determining means for, when the vehicle has been placed in four-wheel drive by the driving torque distributing apparatus, determining whether the running state of the vehicle is a muffled sound producing state brought about by vibration of a differential gear unit included in a drive-line downstream of the driving torque distributing apparatus due to string vibration of a drive belt of the belt-type transmission, and ii) speed ratio changing means for changing the speed ratio of the belt-type transmission when it is determined by the muffled sound determining means that the running state of the vehicle is the muffled sound producing state, compared to when the running state of the vehicle is not the muffled sound producing state. The control method includes the steps of i) determining whether the running state of the vehicle is a muffled sound producing state brought about by vibration of a differential gear unit included in a drive-line downstream of the driving torque distributing apparatus due to string vibration of a drive belt of the belt-type transmission, when the vehicle has been placed in four-wheel drive by the driving torque distributing apparatus, and ii) changing the speed ratio of the belt-type transmission when it is determined that the running state of the vehicle is the muffled sound producing state, compared to when the running state of the vehicle is not the muffled sound producing state.

Accordingly, it is determined first whether the running state of the vehicle is a muffled sound producing state in which a muffled sound from vibration of the differential gear unit in the drive-line downstream of the driving torque distributing apparatus is being produced or may be produced, when the vehicle has been placed in four-wheel drive by the driving torque distributing apparatus. Then, if it is determined that the running state of the vehicle is the muffled sound producing state, the speed ratio of the belt-type transmission is changed, compared to when the running state of the vehicle does not correspond to the muffled sound producing state. This change in speed ratio causes the frequency of the string vibration of the drive belt to change, thus eliminating a resonance relationship with the natural frequency of the drive-line downstream of the driving torque distributing apparatus, such that the muffled sound is reduced.

The muffled sound determining means may determine whether the running state of the vehicle is the muffled sound producing state based on whether a value related to the speed of the vehicle and a value of the speed ratio of the belt-type transmission is each within a respective preset range.

Accordingly, it is possible to determine whether the running state of the vehicle is the muffled sound producing state based on at least the value related to the speed of the vehicle and the speed ratio of the belt-type transmission, as values indicative of the running state of the vehicle.

The muffled sound determining means may determine that the running state of the vehicle is not the muffled sound producing state when a value related to the torque transmitted to the differential gear unit by the driving force torque distributing apparatus is below a predetermined reference torque.

Accordingly, when the value related to the torque transmitted to the differential gear unit by the driving torque distributing apparatus is below the predetermined torque, there is little effect from the string vibration of the drive belt that is transmitted from the voltage to the differential gear unit. Therefore, the tension on the derive belt, the speed ratio of the belt-type transmission, and the torque distribution by the driving torque distributing apparatus are not changed.

Also, the vehicle may have a four-wheel drive lock switch for locking the driving torque distributing apparatus in four-wheel drive. The muffled sound determining means may determine that the running state of the vehicle is not the muffled sound producing state when the four-wheel drive lock switch is off, and the value related to the torque transmitted to the differential gear unit by the driving torque distributing apparatus is below the predetermined reference torque. Accordingly, the state in which the drive belt of the belt-type transmission and the differential gear unit tend to resonate with each other can easily be determined.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

> FIG 1 is a skeleton view of a vehicular drive apparatus according to embodiments of the present invention;
> FIG. 2 is a block line diagram showing the main portions of functions of an electronic control apparatus;
> FIG. 3 is a diagram of a hydraulic circuit for controlling shift control pressure and squeezing force control pressure of a belt-type transmission;
> FIG 4 is a view showing an example of a shift map used to obtain a target rotation speed in shift control of the belt-type transmission;
> FIG 5 is a view showing an example of a necessary hydraulic pressure map for obtaining the necessary hydraulic pressure according to a speed ratio and the like in squeezing force control of the belt-type transmission;
> FIG 6 is a view schematically showing the structure of an electronically controlled coupling;
> FIG 7 is a graph showing an adjustment coefficient for increasing the driving force to be distributed to rear wheels according to an increase in the differential rotation speed of the coupling shown in FIG 6;
> FIG 8 is a functional block line diagram schematically showing the control functions of the electronic control apparatus in FIG 2;
> FIG 9 is a flowchart illustrating the main portions of a control operation executed by the electronic control apparatus in FIG 2; and
> FIG 10 is a functional block line diagram which schematically shows the control functions of the electronic control apparatus in FIG 2 according to another example embodiment of the invention, and which corresponds to FIG 8.

DETAILED DESCRIPTION OF EMBODIMENTS

Example embodiments of the present invention will be described in greater detail below with reference to the accompanying drawings.

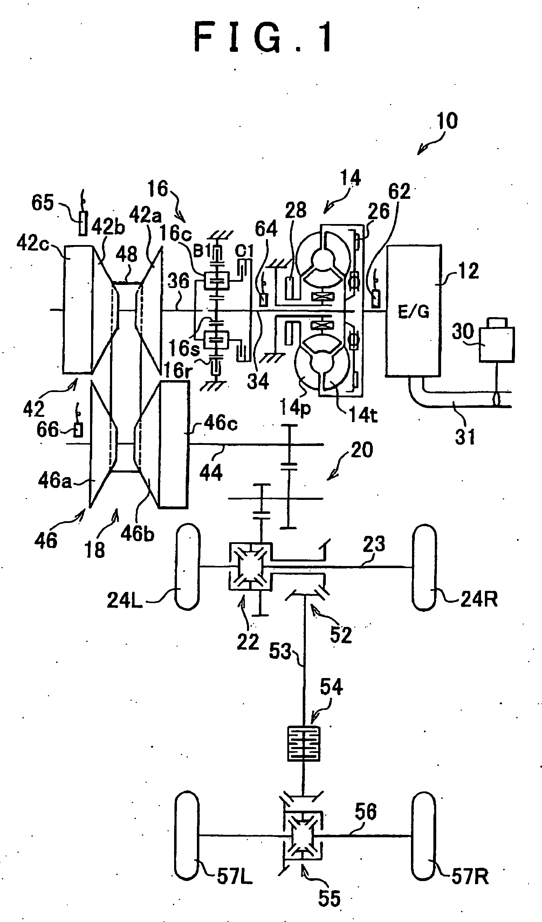

FIG. 1 is a skeleton view of the structure of a front-engine for-wheel drive vehicle having a vehicular power transmission apparatus 10 according to example embodiments of the present invention. In FIG 1, torque generated by an internal combustion engine (hereinafter simply referred to as "engine") 12, which is a driving force source, can be transmitted to left and right front wheels 24R and 24L via a torque converter 14 which serves as a fluid power transmitting device, a forward-reverse switching apparatus 16, an input shaft 36, a belt-type transmission (CVT) 18, reduction gears 20, a front wheel differential gear unit 22, and left and right front wheel axles 23. In addition, the torque generated by the engine 12 can also be transmitted to left and right rear wheels 57R and 57L via a power transfer (i.e., a transfer) 52, a propeller shaft 53, which is a driving force transmitting shaft, an electronically controlled coupling 54 (hereinafter simply referred to as "coupling 54") which is a front-rear wheel driving torque distributing apparatus, a rear wheel differential gear unit 55, and a pair of left and right rear wheel axles 56. That is, the power transmission apparatus 10 shown in FIG 1 is one example of a drive-line of an electronically controlled torque splitting four-wheel drive vehicle in which torque generated by the engine 12, i.e., the driving force source, is divided between the front and rear wheels according to the running state. In this case, the electronically controlled coupling 54 corresponds to a driving torque distributing apparatus.

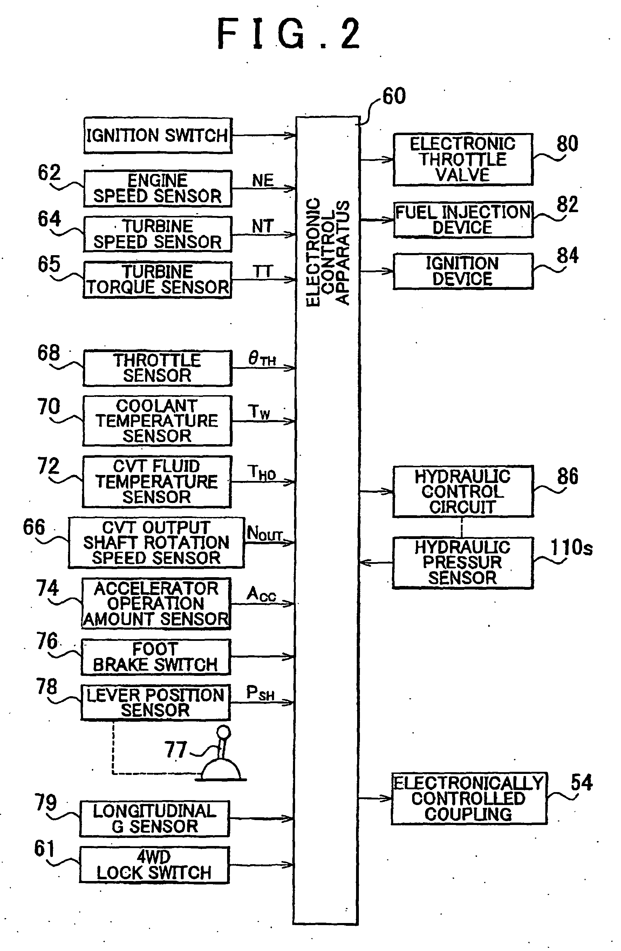

An electronically controlled throttle valve 30 for electronically controlling the amount of air drawn into the engine 12 (i.e., the intake air amount) using a throttle actuator, not shown, is provided in an intake conduit 31 of the engine 12. The output of the engine 12 is controlled (i.e., increased or decreased) by an electronic control apparatus 60 (see FIG. 2) performing fuel injection control and opening/closing control of the electronically controlled throttle valve 30 and the like according to an accelerator operation amount Acc indicative of the amount of output required by the driver, and the like.

The torque converter 14 includes a pump impeller 14p that is connected to a crankshaft of the engine 12, and a turbine runner 14t that is connected to the forward-reverse switching apparatus 16 via a turbine shaft 34. The torque converter 14 serves to transmit power through fluid. Also, a lock-up clutch 26 is provided between the pump impeller 14p and the turbine runner 14t. This lock-up clutch 26 is switched between being applied and released by switching the supply of hydraulic pressure to an apply side fluid chamber and a release side fluid chamber using a switching valve or the like in a hydraulic control circuit 86 (see FIG 2). When the lock-up clutch 26 is completely applied, the pump impeller 14p and the turbine runner 14t rotate together as a single unit. A mechanical oil pump 28 that generates hydraulic pressure for controlling a shift in the belt-type transmission 18, generating belt squeezing force, and supplying lubrication oil to various parts is provided with the pump impeller 14p. The turbine shaft 34 corresponds to an output side member of the torque converter 14.

The forward-reverse switching apparatus 16 mainly includes a double-pinion type planetary gear set in which the turbine shaft 34 of the torque converter 14 is integrally connected to a sun gear 16s and the input shaft 36 of the belt-type transmission is integrally connected to a carrier 16c. Meanwhile, the carrier 16c and the sun gear 16s may be selectively connected via a forward clutch C1, and a ring gear 16r may be selectively fixed to a housing by a reverse brake B1. The forward clutch C1 and the reverse brake B1 each correspond to a connecting/disconnecting device and are hydraulic friction apply devices that are frictionally applied by hydraulic cylinders. When the forward clutch C1 is applied and the reverse brake B1 is released, the forward-reverse switching apparatus 16 rotates as a single unit, thereby establishing a forward power transmitting path such that forward driving force is transmitted to the belt-type transmission 18. On the other hand, when the reverse brake B1 is applied and the forward clutch C1 is released, the forward-reverse switching apparatus 16 establishes a reverse power transmitting path in which the input shaft 36 rotates in a direction opposite that of the turbine shaft 34 such that reverse driving force is transmitted to the belt-type transmission 18. Also, when both the forward clutch C1 and the reverse brake B1 are released, the forward-reverse switching apparatus 16 is in neutral (i.e., in a disconnected state) in which the transmission of power is interrupted.

The forward clutch C1 and the reverse brake B1 are applied and released by the mechanical switching of a manual valve, not shown, in the hydraulic control circuit 86 according to operation of a shift lever 77 which functions as a shift operation member. The shift lever 77 is selectively and successively operated into a "P" (park) position for parking, a "R" (reverse) position for traveling in reverse, a "N" (neutral) position for interrupting the transmission of power, a "D" (drive) position for traveling forward, and a "L" (low) position for obtaining a strong engine brake. When the shift lever 77 is in the "P" or "N" position, hydraulic fluid in the forward clutch C1 and the reverse brake B1 is drained through the manual valve so that both the forward clutch C1 and the reverse brake B1 are released. However, when the shift lever 77 is in the "R" position, output pressure for running in reverse is supplied from a reverse output port of the manual valve to the reverse brake B1 to apply the reverse brake B1, while hydraulic pressure in the forward clutch C1 is drained through the manual valve to release the forward clutch C1. Also, when the shift lever 77 is in the "D" or "L" position, output pressure for forward running is supplied from a forward output port of the manual valve to the forward clutch C1 to apply the forward clutch C1, while hydraulic fluid in the reverse brake B1 is drained through the manual valve to release the reverse brake B1.

The belt-type transmission 18 includes an input side variable pulley 42 with a variable efficient radius that is provided on the input shaft 36 and functions as an input side member, an output side variable pulley 46 with a variable efficient radius that is provided on the output shaft 44 and functions as an output side member, and a drive belt 48 that is wound around the variable pulleys 42 and 46 and functions as a power transmitting member that is in frictional contact with the variable pulleys 42 and 46. Power is transmitted via the frictional force between the drive belt 48 and the variable pulleys 42 and 46. The input side variable pulley 42 includes a fixed rotating body 42a, a movable rotating body 42b, and an input side hydraulic cylinder 42c. The fixed rotating body 42a is fixed to the input shaft 36. The movable rotating body 42b is provided on the input shaft 36 in such a manner that it is able to move in the axial direction of the input shaft 36 but unable to rotate relative to the input shaft 36. The input side hydraulic cylinder 42c applies thrust to the moveable rotating body 42b, which changes a V groove width between the fixed rotating body 42a and the movable rotating body 42b. Similarly, the output side variable pulley 46 includes a fixed rotating body 46a, a movable rotating body 46b, and an output side hydraulic cylinder 46c. The fixed rotating body 46a is fixed to the output shaft 44. The movable rotating body 46b is provided on the output shaft 44 in such a manner that it is able to move in the axial direction of the output shaft 44 but unable to rotate relative to the output shaft 44. The output side hydraulic cylinder 46c applies thrust to the movable rotating body 46b, which changes a V groove width between the fixed rotating body 46a and the movable rotating body 46b. The winding radius (i.e., the effective radius) of the drive belt 48 can be changed by changing the V groove widths of the variable pulleys 42 and 46, which is done by controlling the hydraulic pressure in the hydraulic cylinder 42c of the input side variably pulley 42. As a result, the speed ratio $\gamma$ (= input shaft rotation speed $N_{IN}$ /output shaft rotation speed $N_{OUT}$) can be changed continuously (i.e., in a non-stepped manner).

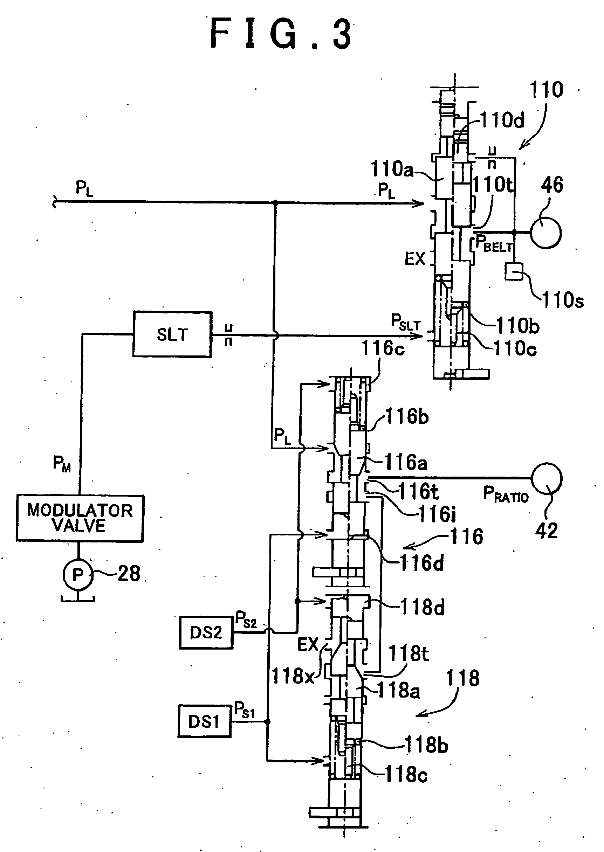

FIG. 3 is a hydraulic circuit diagram which shows the main portions of the hydraulic control circuit 86 that relate to speed ratio control and belt squeezing force control of the belt-type transmission 18, such as a squeezing force control valve 110, a speed ratio increase control valve 116, a speed ratio decrease control valve 118 and the like. In this case, a linear solenoid valve SLT is normally used to control the belt squeezing force of the belt-type transmission 18 via the squeezing force control valve 110.

The hydraulic pressure in the hydraulic cylinder 42c of the input side variable pulley 42 is regulated (i.e., controlled) by the speed ratio increase control valve 116 and the speed ratio decrease control valve 118 in the hydraulic control circuit 86 so that the speed ratio $\gamma$ changes in a continuous (i.e., non-stepped) manner. The speed ratio increase control valve 116 includes a spool valve body 116a, a spring 116b, a fluid chamber 116c, and a fluid chamber 116d. The spool valve body 116a is provided so as to be able to move in the axial direction to open and close an inlet/outlet port 116t and an inlet/outlet port 116i. The spring 116b serves as urging means for urging the spool valve body 116a in a direction that opens up communication between the inlet/outlet port 116t and the inlet/outlet port 116i. The fluid chamber 116c houses the spring 116b and receives control pressure PS2 which is output pressure from a solenoid valve DS2 that is duty controlled by the electronic control apparatus 60 in order to push the spool valve body 116a in a direction that opens up communication between the inlet/outlet port 116t and the inlet/outlet port 116i. The fluid chamber 116d receives control pressure PS1 which is output pressure from a solenoid valve DS1 that is duty controlled by the electronic control apparatus 60 in order to push the spool valve body 116a in a direction that closes off the inlet/outlet port 116i. Similarly, the speed ratio decrease control valve 118 includes a spool valve body 118a, a spring 118b, a fluid chamber 118c, and a fluid chamber 118d. The spool valve body 118a is provided so as to be able to move in the axial direction to open and close an inlet/outlet port 118t. The spring 118b serves as urging means for urging the spool valve body 118a in a direction that closes the speed ratio decrease control valve 118. The fluid chamber 118c houses the spring 118b and receives the control pressure PS1 which is output pressure from the solenoid valve DS1 that is duty controlled by the electronic control apparatus 60 in order to push the spool valve body 118a in a direction that closes the speed ratio decrease control valve 118. The fluid chamber 118d receives the control pressure PS2 which is output pressure from the solenoid valve DS2 that is duty controlled by the electronic control apparatus 60 in order to push the spool valve body 118a in a direction that opens the speed ratio decrease control valve 118.

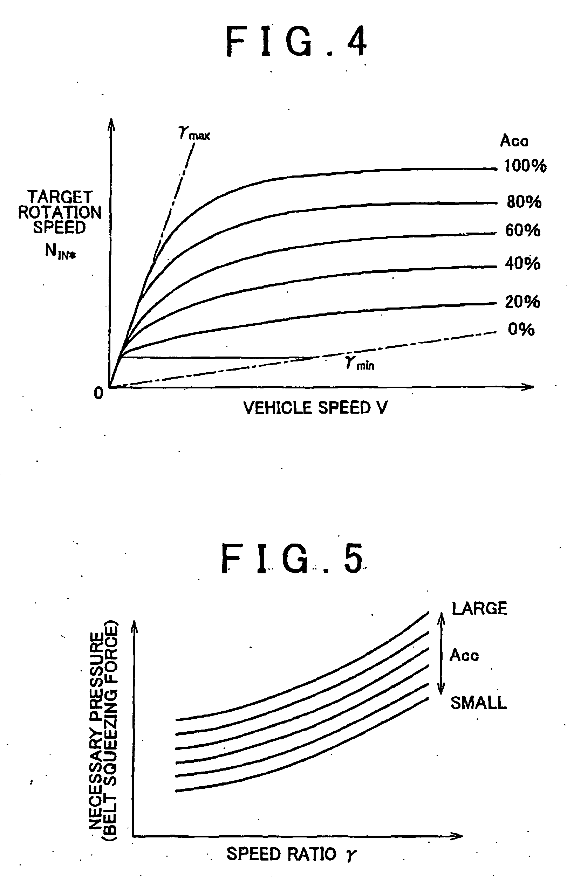

The solenoid valve DS1 outputs the control pressure PS1 to reduce the speed ratio $\gamma$, i.e., to perform an upshift, by supplying hydraulic fluid to the input side hydraulic cylinder 42c to increase the pressure and thereby reduce the V groove width of the input side variable pulley 42. The solenoid valve DS2 outputs the control pressure PS2 to increase the speed ratio $\gamma$, i.e., to perform a downshift, by discharging hydraulic fluid from the input side hydraulic cylinder 42c to decrease the pressure and thereby increase the V groove width of the input side variable pulley 42. More specifically, when the control pressure PS1 is output, control is continuously performed to supply line pressure PL which is input to the speed ratio increase control valve 116 to the input side hydraulic cylinder 42c so that it reaches a shift control pressures PRATIO. Similarly, when the control pressure PS2 is output, control is continuously performed to discharge hydraulic fluid from the input side hydraulic cylinder 42c through a discharge port 118x via the inlet/outlet ports 116t, 116i, and 118t so that it reaches the shift control pressure PRATIO. For example, as shown in FIG 4, a target rotation speed NIN* for the input side is calculated from a preset shift map which has the vehicle speed V and the accelerator operation amount Acc that is indicative of the amount of output required by the driver as parameters. Then the speed ratio $\gamma$ is changed in a continuous (i.e., non-stepped) manner by performing shift control of the belt-type transmission 18, i.e., by controlling the shift control pressure PRATIO by supplying or discharging hydraulic fluid to or from the hydraulic cylinder 42c of the input side variable pulley 42, according to the difference between the actual input shaft rotation speed NIN and the target rotation speed NIN* so that the actual input shaft rotation speed NIN comes to match the target rotation speed NIN*. The map shown in FIG 4 corresponds to shift conditions. In this map, the target rotation speed NIN* is set such that the speed ratio $\gamma$ is larger the lower the vehicle speed V is and the greater the accelerator operation amount Acc is (i.e., such that the speed ratio $\gamma$ is larger at a lower vehicle speed and with a greater accelerator operation amount Acc). Also, the vehicle speed V corresponds to the output shaft rotation speed NOUT so the target rotation speed NIN*, which is the target value for the input shaft rotation speed NIN, corresponds to a target speed ratio and is set within a range between a minimum speed ratio $\gamma$min and a maximum speed ratio $\gamma$max of the belt-type transmission 18.

Meanwhile, the hydraulic pressure of the hydraulic cylinder of the output side variable pulley 46 is regulated (i.e., controlled) by the squeezing force control valve 110 of the hydraulic control circuit 86 so that the drive belt 48 will not slip. The squeezing force control valve 110 includes a spool valve body 110a, a spring 110b, a fluid chamber 110c, and a feedback fluid chamber 110d. The spool valve body 110a is provided so as to be able to move in the axial direction to open and close an inlet/outlet port 110t. The spring 110b serves as urging means for urging the spool valve body 110a in a direction that opens the squeezing force control valve 110. The fluid chamber 110c houses the spring 110b and receives control pressure PSLT which is output pressure from a linear solenoid valve SLT that is duty controlled by the electronic control apparatus 60 in order to push the spool valve body 110a in a direction that opens the squeezing force control valve 110. The feedback fluid chamber 110d receives squeezing force control pressure PBELT which is output to push the spool valve body 110a in a direction that closes the squeezing force control valve 110. The squeezing force control valve 110 outputs the squeezing force control pressure PBELT by continuously regulating (Le., controlling) the line pressure PL with the control pressure PSLT from the linear solenoid valve SLT as the pilot pressure. For example, as shown in FIG 5, the squeezing force control pressure PBELT of the hydraulic cylinder 46c of the output side variable pulley 46 is controlled according to a map of necessary pressure (which corresponds to the belt squeezing force), which is set in advance, so that the belt will not slip, with the speed ratio $\gamma$ and the accelerator operation amount Acc corresponding to the transfer torque as parameters. The belt squeezing force, i.e., the frictional force between the drive belt 48 and the variable pulleys 42 and 46, is increased and decreased according to this squeezing force control pressure PBELT. The pressure PBELT in the output side hydraulic cylinder 46c, which is the output pressure of the squeezing force control valve 110, is detected by a hydraulic pressure sensor 110s.

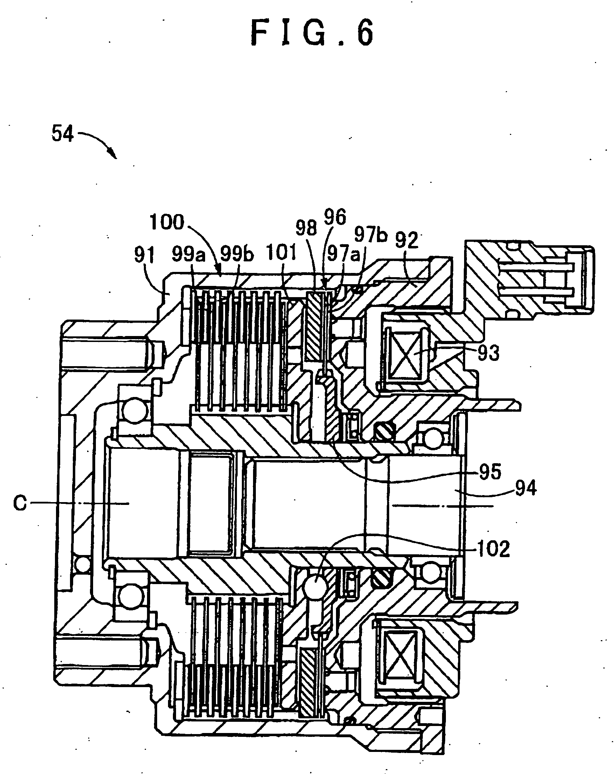

FIG 6 is a sectional view of an example of the structure of the coupling 54. As shown in FIG. 6, the coupling 54 includes a first housing 91, a second housing 92, an output shaft 94, a control cam 95, a control clutch 96, an armature 98, a main clutch 100, and a main cam 101. The first housing 91 is concentric with the propeller shaft 53 that serves as the input shaft, and rotates together with the propeller shaft 53 about a common axis C. The second housing 92 includes a coil (i.e., an electromagnetic solenoid) 93 and is fixed on the inner peripheral side of the first housing 91. The output shaft 94 is arranged concentric with the first housing 91 and rotatable about the axis C relative to the first housing 91. The control cam 95 is arranged concentric with the output shaft 94 and rotatable about the axis C relative to the output shaft 94. The control clutch 96 includes a plurality of alternately arranged clutch plates 97a and 97b which are apply elements in order to prevent relative rotation between the first housing 91 and the control cam 95 or make the control cam 95 slip with respect to the first housing 91. The armature 98 is an annular piece of iron that is arranged concentric with the output shaft 94 and is able to move in the direction of the axis C relative to the output shaft 94 in order to squeeze the clutch plates 97a and 97b of the control clutch 96 between it and the second housing 92. The main clutch 100 includes a plurality of alternately arranged clutch plates 99a and 99b which are apply elements in order to prevent relative rotation between the first housing 91 and the output shaft 94 or make the output shaft 94 slip with respect to the first housing 91. The main cam 101 is arranged concentric with the output shaft 94 in such a manner that it is able to move in the axial direction of the output shaft 94 but unable to rotate relative to the output shaft 94 about the axis C in order to squeeze the clutch plates 99a and 99b of the main clutch 100 between it and the first housing 91. The output shaft 94 is connected to an input shaft (i.e., input gear) of the rear wheel differential gear unit 55. Also, a plurality of concave portions corresponding to the respective cam faces are formed on the mutually opposing sides of the control cam 95 and the main cam 101. A plurality of balls 102 are arranged between the control cam 95 and the main cam 101 so that they fit between the respective corresponding concave portions.

In the coupling 54 structured as described above, when the coil 93 is de-energized, both the control clutch 96 and the main clutch 100 are disengaged so driving force (i.e., torque) from the propeller shaft 53 which serves as the input shaft is not transmitted to the output shaft 94. When the coil 93 is energized, a magnetic field is generated around the coil 93. As a result, the armature 98 is attracted to the second housing 92 side such that the clutch plates 97a and 97b are squeezed between it and the second housing 92. Therefore, the control clutch 96 is applied or made to slip depending on the control current supplied to the coil 93. When the control clutch 96 is applied or made to slip in this way, the rotation speed of the control cam 95 becomes different than the rotation speed of the main cam 101. As a result, the balls 102 are forced against the inclined face of the concave portion in the control cam 95 and then pushed toward the main cam 101 side, such that the main cam 101 is pushed toward the propeller shaft 53 side. As a result, the clutch plates 99a and 99b are squeezed between the first housing 91 and the main cam 101, thereby applying the main clutch 100 or making it slip such that driving force from the propeller shaft 53 is transmitted to the output shaft 94 at a predetermined ratio.

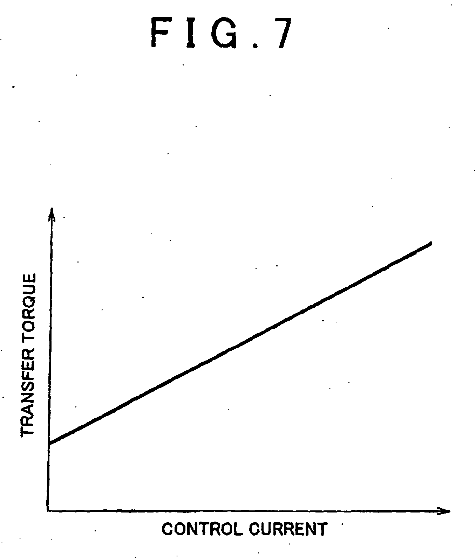

The transfer torque transmitted by the coupling 54 is proportionally set according to the control current supplied to the coil 93, as shown in FIG 7, for example. That is, when the current supplied to the coil 93 is relatively low, the force attracting the armature 98 toward the second housing 92 is relatively weak so the apply force of the control clutch 96 is relatively small. Therefore, the difference in the relative rotation between the control cam 95 and the main cam 101 is small such that the force pushing the main cam 101 toward the propeller shaft 53 is relatively weak so the transfer torque is relatively small. Conversely, when the current supplied to the coil 93 is relatively large, the force attracting the armature 98 toward the second housing 92 is relatively strong so the apply force of the control clutch 96 is relatively large. Therefore, the difference in the relative rotation between the control cam 95 and the main cam 101 is large such that the force pushing the main cam 101 toward the propeller shaft 53 is relatively strong so the transfer torque is relatively large. When the current supplied to the coil 93 becomes equal to or greater than a predetermined value, driving force is transmitted to the front and rear wheels in a state that is close to that of locked-up four-wheel drive. According to this structure, the ratio of driving force transmitted to the rear wheels 57R and 57L to the total driving force output from the belt-type transmission 18 is controlled in a non-stepped manner within a range from 0 to 0.5.

FIG 2 is a block line diagram showing the control system provided in a vehicle for controlling the engine 12 and the belt-type transmission 18 and the like shown in FIG. 1. As shown in the drawing, various sensors and switches and the like are connected to the electronic control apparatus 60. Some of these sensors and switches include an engine speed sensor 62, a turbine speed sensor 64, a turbine torque sensor 65, a throttle sensor 68 with an idle switch, a coolant temperature sensor 70, a CVT fluid temperature sensor 72, a CVT output shaft rotation speed sensor 66, an accelerator operation amount sensor 74, a foot brake switch 76, a lever position sensor 78, a longitudinal G sensor 79, and the hydraulic pressure sensor 110s. These sensors and switches output signals to the electronic control apparatus 60, including, for example, a signal indicative of the speed (i.e., engine speed) NE of the engine 12, a signal indicative of the speed (i.e., turbine speed) NT of the turbine shaft 34, a signal indicative of the rotation torque TT of the turbine shaft 34, a signal indicative of a fully closed state (i.e., idling state) of an electronic throttle valve 80 and the opening amount (i.e., throttle valve opening amount) θTH of the electronic throttle valve 80, a signal indicative of the coolant temperature TW of the engine 12, a signal indicative of the fluid temperature THO in a hydraulic circuit of the belt-type transmission 18 and the like, a signal indicative of the output shaft rotation speed NOUT of the belt-type transmission 18, a signal indicative of the accelerator operation amount Acc which is the operation amount of an accelerator operating member such as an accelerator pedal, a signal indicative of whether a foot brake which is a service brake is being operated, a signal indicative of the lever position (operating position) PSH of a shift lever 77, a signal indicative of the longitudinal acceleration G, and a signal indicative of the squeezing force control pressure PBELT in the output side hydraulic cylinder 46c. The turbine speed NT matches the input shaft rotation speed NIN when the forward clutch C1 is applied and the vehicle is traveling forward. Also, the vehicle speed V corresponds to the rotation speed (i.e., the output shaft rotation speed) NOUT of the output shaft 44 of the belt-type transmission 18. That is, the value of the vehicle speed V is calculated by the output shaft rotation speed NOUT, the gear ratio of the front wheel differential gear unit 22, and the diameter of the driving wheels and the like. Accordingly, this output shaft rotation speed NOUT is a value that is related to the speed of the vehicle. Also, the accelerator operation amount Acc indicates the amount of output required by the driver. Further, the lever position sensor 78 includes a plurality of switches such as a neutral position detecting switch, a drive position detecting switch, an engine brake position detecting switch, and a reverse position detecting switch, for example.

The electronic control apparatus 60 includes a microcomputer that has a CPU, RAM, ROM, and an input/output interface and the like. The CPU executes various controls, such as output control of the engine 12, shift control of the belt-type transmission 18, belt squeezing force control, apply/release control of the lock-up clutch 26, and apply force control of the coupling 54 and the like, by signal processing according to programs stored in the ROM beforehand while using the temporary storage function of the RAM. The CPU may also be divided for engine control and shift control when necessary. The output control of the engine 12 is performed by the electronic throttle valve 80, a fuel injection device 82, and an ignition device 84 and the like. The shift control of the belt-type transmission 18, the belt squeezing force control, and the apply/release control of the lock-up clutch 26 are all performed by the hydraulic control circuit 86. The hydraulic control circuit 86 includes, for example, a solenoid valve which is energized by the electronic control apparatus 60 and opens and closes a fluid passage, a linear solenoid valve which is energized by the electronic control apparatus 60 and performs hydraulic pressure control, and an on-off valve which opens and closes a fluid passage according to signal pressures output from those solenoid valves, and a pressure regulating valve which controls the hydraulic pressure according to signal pressures output from those solenoid valves. Also, apply force control of the coupling 54 is performed by controlling the current supplied to an electromagnetic solenoid 93. Incidentally, the 4WD lock switch 61 in FIG 2 is used in another example embodiment that will be described later and is not absolutely necessary in this example embodiment.

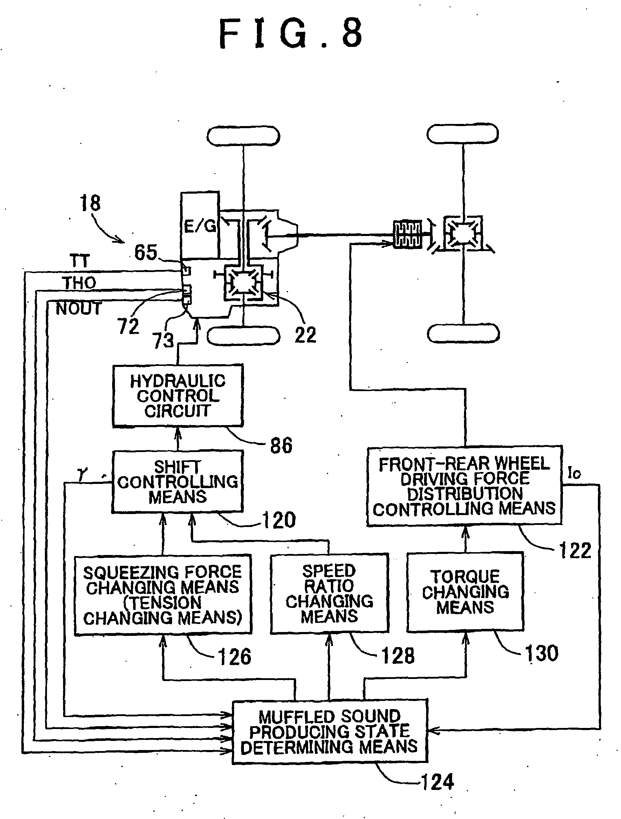

FIG. 8 is a functional block line diagram showing the main control functions of the electronic control apparatus 60 for executing shift control. Shift controlling means 120 in FIG. 8 is used to change the speed ratio γ of the belt-type transmission 18. More specifically, the shift controlling means 120 first reads the current running state of the vehicle from various sensors provided in the vehicle. For example, the shift controlling means 120 sets the target rotation speed NIN* of the rotation speed (hereinafter referred to as "input shaft rotation speed NIN") of the input side variable pulley 42 or the input shaft 36 as the input side member from the preset shift map shown in FIG. 4 based on the lever position (operating position) PSH read from the lever position sensor 78, the accelerator operation amount Acc read from the accelerator operation amount sensor 74, and the vehicle speed V read from the CVT output shaft rotation speed sensor 66, and the like. Then the shift controlling means 120 determines the speed ratio γ of the belt-type transmission 18 at which the actual input shaft rotation speed NIN will match the target rotation speed NIN*, and realizes that speed ratio γ by continuously (i.e., in a non-stepped manner) changing the speed ratio by controlling the hydraulic pressure in the hydraulic cylinder 42c of the input side variable pulley 42 using the hydraulic control circuit 86. This shift controlling means 120 constantly executes this control while the vehicle is running.

Also, the shift controlling means 120 controls the amount of belt squeezing force by controlling the hydraulic pressure in the hydraulic cylinder 46c of the output side variable pulley 46 using the hydraulic control circuit 86. For example, the shift controlling means 120 determines the amount of squeezing force control pressure PBELT, which is the hydraulic pressure necessary to obtain the belt squeezing force, from the preset map shown in FIG. 5 based on the accelerator operation amount Acc read from the accelerator operation amount sensor 74 and the speed ratio γ of the belt-type transmission 18 set by the shift controlling means 120. The amount of belt squeezing force is the smallest value at which power can be transmitted from the input side pulley 42 to the output side pulley 46, i.e., the smallest value at which the drive belt 48 will not slip on the input side pulley 42 or the output side pulley 46. That is, the shift controlling means 120 also functions as squeezing force controlling means.

The front-rear wheel driving force distribution controlling means 122 controls the distribution of torque (i.e., driving force) which is generated by the engine 12, input to the front wheel differential gear unit 22 and the rear wheel differential gear unit 55 by controlling the operation of the coupling 54 (in this specification, this distribution may also be referred to as "input torque distribution"). More specifically, when the input torque distribution is determined, the value of the control current for applying the necessary torque to the rear wheels is calculated based on the relationship (i.e., map) shown in FIG 7, for example. Then the apply force of the main clutch 100 in the coupling 54 is controlled by controlling the control current Ic supplied to the coil 93 provided in the coupling 54 to the calculated current value. As a result, the ratio of the driving force transmitted to the rear wheels 57L and 57R to the total driving force output from the belt-type transmission 18 is changed continuously (i.e., in a non-stepped manner) within a range between 0 and 0.5. Here, a state in which the ratio of the driving force transmitted to the rear wheels 57L and 57R is not 0, i.e., a state in which driving force is also transmitted to the rear wheels 57L and 57R, will be referred to as four-wheel drive.

In the belt-type transmission 18, the drive belt 48 that is wound around the input side variable pulley 42 and the output side variable pulley 46 is made of a plurality of metal elements that are sandwiched between two circular steel rings, and transmits power by the compressing (i.e., pushing) action of these elements. Here, when the contact surface pressure at the contact surface of the drive belt 48 and the input side variable pulley 42 or the contact surface pressure at the contact surface of the drive belt 48 and the output side variable pulley 46 is less than the input torque that is input to the belt-type transmission 18, the drive belt 48 slips on the input side pulley 42 or the output side pulley 46. More specifically, string vibration is produced in the drive belt 48 on the slack side. Whether or not string vibration is produced, and if so, the frequency thereof, changes depending on the running state of the vehicle. Meanwhile, in the drive system in which four-wheel drive is possible in this example embodiment, the drive-line that drives the rear wheels, and more specifically, the drive-line downstream of the power transfer 52, i.e., the drive-line to the pair of left and right rear wheels 57R and 57L via the power transfer 52, the propeller shaft 53, the coupling 54, the rear wheel differential gear unit 55, and the pair of left and right rear wheels 56, has a natural frequency. Here, when the frequency f1 of the string vibration of the drive belt 48 and the natural frequency f2 of the drive-line from the power transfer 52 to the rear wheels 57L and 57R approach the relationship expressed by Expression (1) below, both of the vibrations resonate when the belt-type transmission 18 is connected to the drive-line from the power transfer 52 to the rear wheels 57L and 57R by the coupling 54 being placed in a power transmitting state.

$$f1 = m \times f2 \text{ (or } f1 = f2 / m) \ldots (1)$$

Incidentally, in this example embodiment, the drive-line from the power transfer 52 to the rear wheels 57L and 57R corresponds to the downstream side of the driving torque distributing apparatus of the invention.

The rear wheel differential gear unit 55 includes a differential mechanism that uses straight bevel gears and is housed in a case, not shown, which is mounted to rear suspension or the like, not shown, via vibration-proofing material such as a rubber cushion. When the string vibration of the drive belt 48 and the vibration of the drive-line from the power transfer 52 to the rear wheels 57L and 57R resonate, the rear wheel differential gear unit 55 resonates with the case. Here, when the amount of vibration of the case exceeds the amount of vibration able to be absorbed by the vibration-proofing material, the vibration from the case is transmitted to the rear suspension to which the case is mounted, and to the floor to which the suspension is connected and the like, thus producing a muffled sound. Incidentally, the natural frequency of the drive-line from the power transfer 52 to the rear wheels 57L and 57R is determined by the parts of the drive-line. Meanwhile, value of the frequency f1 of the string vibration of the drive belt 48 changes from the effects of the torque input to the belt-type transmission 18, the temperature of the hydraulic fluid in the belt-type transmission 18, and the speed ratio γ of the belt-type transmission 18 and the like. Incidentally, the front wheel differential gear unit 22 is integrally formed with the belt-type transmission 18 and the like, as schematically shown in FIG. 8, for example, so the muffled sound tends not to be produced when the string vibration of the belt-type transmission 18 is transmitted to the front wheel differential gear unit 22.

Therefore, muffled sound determining means 124 determines whether the running state of the vehicle corresponds to a state in which the muffled sound may be produced. More specifically, for example, the muffled sound determining means 124 determines whether the vehicle is in four-wheel drive, and whether the running state of the vehicle is a state in which a muffled sound will be produced or is able to be produced (hereinafter, this state will be referred to as "muffled sound producing state") based on whether the values of the output shaft rotation speed NOUT of the belt-type transmission 18, the input torque to the belt-type transmission 18, the hydraulic fluid temperature THO of the belt-type transmission 18, and the speed ratio γ of the belt-type transmission 18 are in a predetermined muffled sound producing region. Here, the input torque of the belt-type transmission 18 is proportional to the turbine torque (i.e., the output torque) TT of the torque converter 14 so this determination can be made using the turbine torque TT instead of the input torque of the belt-type transmission 18.

More specifically, the muffled sound determining means 124 calculates, through testing or simulation or the like beforehand, the ranges for the values of the output shaft rotation speed NOUT of the belt-type transmission 18, the turbine torque TT, the hydraulic fluid temperature THO of the belt-type transmission 18, and the speed ratio $\gamma$ of the belt-type transmission 18, within which the muffled sound may be produced as muffled sound producing regions. Then the muffled sound determining means 124 determines whether the belt-type transmission 18 is in a state in which the muffled sound may be produced based on whether the values of the output shaft rotation speed NOUT of the belt-type transmission 18 measured by the CVT output shaft rotation speed sensor 66, the turbine torque TT measured by the turbine torque sensor 65, the hydraulic fluid temperature THO of the belt-type transmission 18 measured by the CVT fluid temperature sensor 72, and the speed ratio $\gamma$ of the belt-type transmission 18 determined by the shift controlling means 120 are within the muffled sound producing regions. This determination is made based, for example, on i) whether the value of the output shaft rotation speed NOUT of the belt-type transmission 18 is within its muffled sound producing region (i.e., NOUT4WDL $\leq$ NOUT $\leq$ NOUT4WDH), ii) whether the turbine torque TT corresponding to the input torque to the belt-type transmission 18 is within its muffled sound producing region (i.e., TT $\geq$ TTUP4WD), iii) whether the hydraulic fluid temperature THO of the belt-type transmission 18 is within its muffled sound producing region (THOPUP4WDH $\leq$ THO $\leq$ THOPUP4WDL), and iv) whether the value of the speed ratio $\gamma$ of the belt-type transmission 18 is within its muffled sound producing region (i.e., $\gamma \geq$ RTOUP4WD). The belt-type transmission 18 may be determined to be in a state in which the muffled sound may be produced when the values of the output shaft rotation speed NOUT, the turbine torque TT, the hydraulic fluid temperature THO, and the speed ratio $\gamma$ are all within their muffled sound producing regions, or when only a portion of them (i.e., one or two or more) are in their muffled sound producing regions. This determination determines whether the string vibration of the drive belt 48 of the belt-type transmission 18 is a string vibration of a frequency that may produce resonance from its relationship with the natural frequency of the drive-line from the power transfer 52 to the rear wheels 57L and 57R.

Moreover, the muffled sound determining means 124 determines whether the vehicle is in four-wheel drive. This determination is made based on whether the value of the transfer torque transmitted from the coupling 54 to the rear wheel differential gear unit 55 exceeds a predetermined value based on the input torque distribution of driving force generated by the engine 12 to the front wheel differential gear unit 22 and the rear wheel differential gear unit 55. That is, the muffled sound determining means 124 determines that the vehicle is in four-wheel drive when the value of the transfer torque to the rear wheel differential gear unit 55 (i.e., the 4WD rear differential transfer torque) is exceeding the predetermined value. This determination determines whether power transfer by the coupling 54 is being performed to a degree where the string vibration of the drive belt 48 of the belt-type transmission 18 and the vibration of the drive-line from the power transfer 52 to the rear wheels 57L and 57R may resonate. This determination is made based, for example, on whether the value FWPT of the transfer torque to the rear wheel differential gear unit 55 is exceeding a threshold value obtained through simulation or testing or the like beforehand, i.e., a value FWPT4WD of the transfer torque to the rear wheel differential gear unit 55 when power is being transmitted by the coupling 54 to a degree where the string vibration of the drive belt 48 of the belt-type transmission 18 may cause the drive-line from the power transfer 52 to the rear wheels 57L and 57R to resonate. If FWPT is equal to or greater than FWPT4WD (i.e., if FWPT $\geq$ FWPT4WD), it is determined that the vehicle is in four-wheel drive. Incidentally, the value FWPT of the transfer torque does not need to be directly detected, but may instead by calculated based on, for example, the driving torque generated by the engine 12 and the torque distribution calculated based on the value of the control current Ic supplied to the coupling 54 and the like.

Squeezing force changing means 126, speed ratio changing means 128, and torque changing means 130 are all means for working to reduce the production of muffled sound when it is determined by the muffled sound determining means 124 that the vehicle is in the muffled sound producing state. Of these, the squeezing force changing means 126 changes the belt squeezing force of the drive belt 48 of the belt-type transmission 18 that is controlled by the hydraulic control circuit 86. More specifically, the belt squeezing force is changed to a value different from a value that the muffled sound determining means 124 determines does not correspond to the muffled sound producing state by controlling the squeezing force control pressure PBELT supplied to the hydraulic cylinder 46c of the output side variable pulley 46, which is done by regulating the pressure using the squeezing force control valve 110. As the value of the belt squeezing force changes, the tension on the drive belt 48 changes so the frequency of the string vibration of the drive belt 48 also changes. Therefore, the muffled sound can be suppressed by eliminating the relationship shown in Expression (1) above between the frequency of the string vibration of the drive belt 48 and the natural frequency of the drive-line from the power transfer 52 to the rear wheels 57L and 57R that results in resonance.

As described above, the belt squeezing force is changed by the squeezing force changing means 126 to eliminate the relationship shown in Expression (1) above between the frequency of the string vibration of the drive belt 48 and the natural frequency of the drive-line from the power transfer 52 to the rear wheels 57L and 57R that results in resonance. More specifically, for example, the value of the tension on the drive belt 48 that will result in the frequency of the string vibration of the drive belt 48 being a frequency that will satisfy Expression (1) above may be calculated. Then the range of the belt squeezing force corresponding to that tension may be calculated, and the value of the tension may be changed to a value outside of that range. That is, the squeezing force changing means 126 corresponds to tension changing means.

Here, the change in the belt squeezing force by the squeezing force changing means 126 may be an increase so that the squeezing force is larger than the value of the squeezing force before the change, or a decrease so that the squeezing force is smaller than the value of the squeezing force before the change. However, when the belt squeezing force during normal running set beforehand, i.e., that is set by the shift controlling means 120 and not changed by the squeezing force changing means 126, is a minimum value that enables power to be transmitted from the input side pulley 42 to the output side pulley 46, the belt squeezing force is increased. On the other hand, in a case such as when the belt squeezing force during normal running is set with room to spare from the minimum value that enables power to be transmitted from the input side pulley 42 to the output side pulley 46, the belt squeezing force may be decreased. In this way, when the belt squeezing force is changed by changing the value of the squeezing force control pressure PBELT, the tension on the drive belt 48 changes, which in turn changes the frequency of the string vibration of the drive belt 48. As a result, resonance tends not to occur between the drive belt 48 and the drive-line from the power transfer 52 to the rear wheels 57L and 57R, such that the production of the muffled sound is reduced.

The speed ratio changing means 128 changes the speed ratio $\gamma$ of the belt-type transmission 18. The speed ratio $\gamma$ of the belt-type transmission 18 is determined by the shift controlling means 120, as described above, based on the running state of the vehicle and a shift map like that shown in FIG. 4, for example. However, the speed ratio changing means 128 changes the speed ratio $\gamma$ determined by the shift controlling means 120. In this case, the speed ratio y may be changed to a degree where the running state of the vehicle will not correspond to the muffled sound producing state. This change may be an increase or a decrease. For example, the speed ratio $\gamma$ is increased when it is lower than a predetermined speed ratio and corresponds to the muffled sound producing state, such as when a muffled sound is produced due to string vibration of the drive belt 48 which is produced by the winding radius of the drive belt 48 around the pulleys 42 and 46 becoming smaller and the movement of the elements of the drive belt 48 becoming larger, for example. In this case, as the value of the speed ratio $\gamma$ is changed by the speed ratio changing means 128, the string vibration of the drive belt 48 decreases or the frequency of the string vibration changes. As a result, resonance tends not to occur between the drive belt 48 and the drive-line from the power transfer 52 to the rear wheels 57L and 57R, such that the production of the muffled sound is reduced.

The torque changing means 130 changes the distribution of driving force (i.e., torque) generated by the engine which is input to the front wheel differential gear unit 22 and the rear wheel differential gear unit 55 (i.e., the input torque distribution) by the coupling 54. This input torque distribution is controlled by controlling the control current supplied to the coil 93 of the coupling 54 determined by the front-rear wheel driving force distribution controlling means 122 as described above. However, the torque changing means 130 changes the input torque distribution by changing the control current supplied to the coil 93 determined by the front-rear wheel driving force distribution controlling means 122. In this case, the value of the control current may be changed to a degree where the running state of the vehicle will not correspond to the muffled sound producing state. This change may be an increase or a decrease. More specifically, for example, when the muffled noise producing state will occur at a given input torque distribution, the value of the control current Ic may be reduced, i.e., the input torque distribution may be changed so that less torque is transmitted to the rear wheels, or increased, i.e., the input torque distribution may be changed so that more torque is transmitted to the rear wheels. In this case, when the torque distribution is changed by the torque changing means 130, the amount of torque transmitted to the drive-line from the power transfer 52 to the rear wheels 57L and 57R changes. As a result, the production of the muffled sound is reduced. In particular, an ordinary vehicle has a mechanism in which the vibration of the differential gear unit is likely to increase, as the amount of transfer torque transmitted to the rear wheel increases. Therefore, the transfer torque is reduced to reduce the vibration.

As described above, when it is determined by the muffled sound determining means 124 that the vehicle is running in the muffled sound producing state, the processes by the squeezing force changing means 126, the speed ratio changing means 128, and the torque changing means 130 are executed. Alternatively, however, only one or a combination of two or more of these processes may be executed.

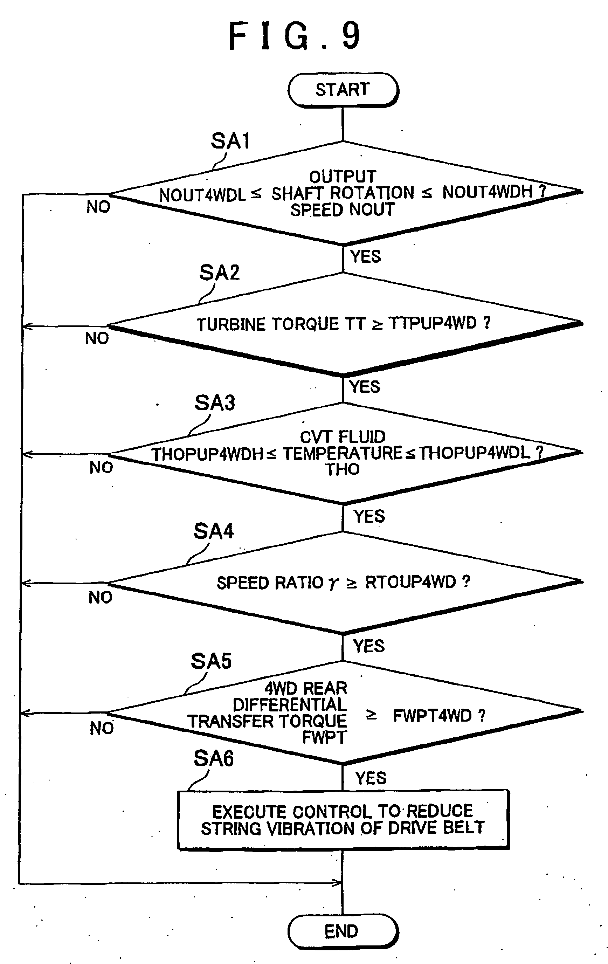

FIG. 9 is a flowchart illustrating an example of a control operation for reducing the production of muffled sound, which is executed by the electronic control apparatus 60. This routine is repeatedly executed at extremely short intervals of time, such as every several milliseconds or several tens of milliseconds, for example.

Steps SA1 to SA5 correspond to the muffled sound determining means 124. In step SA1, it is determined whether the output shaft rotation speed NOUT of the belt-type transmission 18, which is one value indicative of the running state of the vehicle, is within a muffled sound producing region which has a preset NOUT4WDL as a lower limit and a preset NOUT4WDH as an upper limit. That is, it is determined whether the output shaft rotation speed NOUT of the belt-type transmission 18 is no less than NOUT4WDL and no more than NOUT4WDH (i.e., whether NOUT4WDL s NOUT s NOUT4WDH). If the determination in this step is yes, it is determined that the running state of the vehicle may correspond to the muffled sound producing state so step SA2 is executed. If, on the other hand, the determination in this step is no, it is determined that the running state of the vehicle does not correspond to the muffled sound producing state so this cycle of the routine in the flowchart ends.

In step SA2, it is determined whether the value of the torque (i.e., the turbine torque) TT of the turbine shaft of the torque converter 14, which is another value indicative of the running state of the vehicle, is within a muffled sound producing region which has a preset TTPUP4WD as a lower limit. That is, it is determined whether the torque TT is equal to or greater than TTPUP4WD (i.e., whether $TT \geq TTPUP4WD$). If the determination in this step is yes, it is determined that the running state of the vehicle may correspond to the muffled sound producing state so step SA3 is executed. If, on the other hand, the determination in this step is no, it is determined that the running state of the vehicle does not correspond to the muffled sound producing state so this cycle of the routine in the flowchart ends.

In step SA3, it is determined whether the temperature THO of the hydraulic fluid in the belt-type transmission 18, which is another value indicative of the running state of the vehicle, is within a muffled sound producing region which has a preset THOPUP4WDL as a lower limit and a preset THOPUP4WDH as an upper limit. That is, it is determined whether the hydraulic fluid temperature THO of the belt-type transmission 18 is no less than THOPUP4WDL and no more than THOPUP4WDH (i.e., whether $THOPUP4WDL \leq THO \leq THOPUP4WDH$). If the determination in this step is yes, it is determined that the running state of the vehicle may correspond to the muffled sound producing state so step SA4 is executed. If, on the other hand, the determination in this step is no, it is determined that the running state of the vehicle does not correspond to the muffled sound producing state so this cycle of the routine in the flowchart ends.

In step SA4, it is determined whether the value of speed ratio γ of the belt-type transmission 18, which is another value indicative of the running state of the vehicle, is within a muffled sound producing region which has a preset RTOUP4WD as a lower limit. That is, it is determined whether the speed ratio γ is equal to or greater than RTOUP4WD (i.e., whether $\gamma \geq RTOUP4WD$). If the determination in this step is yes, it is determined that the running state of the vehicle may correspond to the muffled sound producing state so step SA5 is executed. If, on the other hand, the determination in this step is no, it is determined that the running state of the vehicle does not correspond to the muffled sound producing state so this cycle of the routine in the flowchart ends.

Step SA5 is executed when the determinations in steps SA1 to SA4 are all yes, i.e., when it is determined that the vehicle is in the muffled noise producing state based on the output shaft rotation speed NOUT of the belt-type transmission 18, the turbine torque TT, the hydraulic fluid temperature THO of the belt-type transmission 18, and the speed ratio γ of the belt-type transmission 18, which are indicative of the running state of the vehicle. In step SA5, it is determined whether the value FWPT of the transfer torque to the rear wheel differential gear unit 55 is greater than a predetermined value FWPT4WD, i.e., whether $FWPT \geq FWPT4WD$. If the determination in this step is yes, then it is determined that the vehicle is in four-wheel drive. As a result, the determinations in all of steps SA1 to SA5 are yes, the running state of the vehicle is the muffled sound producing state and the vehicle is in four-wheel drive. Therefore, it is determined that the vehicle is in a state in which a muffled sound may be produced so step SA6 is executed. If, on the other hand, the determination in this step is no, it is determined that a muffled sound will not be produced and this cycle of the routine in the flowchart ends.

Step SA6 is executed when the determination in step SA5 is yes, i.e., when the vehicle is in a state in which a muffled sound may be produced. Step SA6 corresponds to the squeezing force changing means 126, the speed ratio changing means 128, and the torque changing means 130. In this step, the value of the squeezing force control pressure PBELT is changed in order to change the squeezing force of the drive belt 48 of the belt-type transmission 18, the value of the shift control pressure PRATIO is changed in order to change the speed ratio γ of the belt-type transmission 18, and the value of the drive current Ic supplied to the coupling 54 is changed in order to change the input torque distribution of the coupling 54. These changes of the values of the squeezing force control pressure PBELT, the shift control pressure PRATIO, and the drive current Ic supplied to the coupling 54 may involve increases or decreases of those values. Also, only one of the values of the squeezing force control pressure PBELT, the shift control pressure PRATIO, and the drive current Ic supplied to the coupling 54 may be changed, or a plurality of those values may be changed.

According to the example embodiment described above, it is determined by the muffled sound determining means 124 (i.e., steps SA1 to SA5) whether the vehicle has been placed in four-wheel drive by the driving torque distributing apparatus, and whether the vehicle is operating in a preset muffled sound producing state which is a state in which a muffled sound may be produced by vibration in the rear wheel differential gear unit that distributes driving force input to the rear wheels, which are driving wheels only when the vehicle is in four-wheel drive, to the left and right wheels. When has been determined by the muffled sound determining means 124 that the running state of the vehicle is a muffled sound producing state, at least one of the following i) to iii) is performed. i) The squeezing force of the drive belt 48 by the pulleys 42 and 46 of the belt-type transmission 18 is changed by the squeezing force changing means 126 (step SA6). ii) The speed ratio of the belt-type transmission 18 is changed by the speed ratio changing means 128 (step SA6). iii) The value of the drive current supplied to the coupling 54 is changed by the torque changing means 130 (step SA6). When the squeezing force is changed such that the tension on the drive belt 48 changes, the frequency of the string vibration of the drive belt 48 changes so the resonance relationship with the natural frequency of the drive-line downstream of the driving torque distributing apparatus no longer exists, or the amount of torque transmitted to the drive-line from the power transfer 52 to the rear wheels 57L and 57R changes so the string vibration of the drive belt 48 is not easily transmitted. As a result, the muffled sound is reduced. Also, the squeezing force changing means 126 changes the squeezing force of the drive belt 48 by the pulleys 42 and 46 of the belt-type transmission 18 only when it is determined by the muffled sound determining means 124 that the muffled sound may be produced. As a result, fuel efficiency is improved or the belt durability of the drive belt 48 is improved compared to when the squeezing force is always increased when the vehicle is in four-wheel drive.

According to the example embodiment described above, whether the running state of the vehicle is a muffled sound producing state may be determined based on at least the value of the speed ratio $\gamma$ of the belt-type transmission 18 and the output shaft rotation speed NOUT of the belt-type transmission 18 which is a value related to the speed of the vehicle, as values indicative of the running state of the vehicle.

Also, in the example embodiment described above, control to reduce the muffled sound may be executed when the value FWPT of the transfer torque to the rear wheel differential gear unit 55 is greater than the predetermined value FWPT4WD, which is a state in which the drive belt 48 of the belt-type transmission 18 and the drive-line from the power transfer 52 to the rear wheels 57L and 57R tend to resonate. ,

Next, a second example embodiment of the invention will be described. In the following description, parts that are common to the foregoing first example embodiment will be referred to by the same reference characters and descriptions of those parts will be omitted.

The vehicle in this example embodiment is the same as that in the foregoing example embodiment except for that in this example embodiment it is provided with a 4WD lock switch 61. This 4WD lock switch 61 is a switch that is selectively switched on and off. The 4WD lock switch 61 is switched on by the driver when placing the vehicle in four-wheel drive. Also, as shown in FIG 2, the output signal from the 4WD lock switch 61 is sent to the electronic control apparatus 60.

When the 4WD lock switch 61 is turned off, front-rear wheel driving force distribution control in a 4WD automatic (i.e., AUTO) mode is executed. The front-rear wheel driving force distribution control in the 4WD automatic mode is just like the operation of the front-rear wheel driving force distribution controlling means 122 in the foregoing example embodiment, in which the front-rear wheel driving force distribution controlling means 122 controls the ratio of driving force transmitted to the rear wheels 57L and 57R to the total driving force output from the belt-type transmission 18 in a non-stepped manner within a range from 0 to 0.5. That is, the front-rear wheel driving force distribution controlling means 122 controls the coupling 54, including switching it between two-wheel drive and four-wheel drive.

On the other hand, when the 4WD lock switch 61 is turned on, the front-rear wheel driving force distribution controlling means 122 executes front-rear wheel driving force distribution control in a 4WD lock mode. In this front-rear wheel driving force distribution control in the 4WD lock mode, the front-rear wheel driving force distribution controlling means 122 controls the ratio of driving force transmitted to the rear wheels 57L and 57R to the total driving force output from the belt-type transmission 18 in a non-stepped manner within a range from a preset minimum value that is greater than 0, to 0.5, instead of from 0 to 0.5. That is, the front-rear wheel driving force distribution control in the 4WD lock mode places the vehicle constantly in four-wheel drive. This 4WD lock switch 61 corresponds to a four-wheel drive lock switch.

Also, in the front-rear wheel driving force distribution control in the 4WD lock mode, the front-rear wheel driving force distribution controlling means 122 controls that ratio to a larger value than it is in the 4WD automatic mode for a given vehicle state. More specifically, for example, when the ratio is determined based on the input shaft rotation speed NOUT of the belt-type transmission 18 and an output shaft torque TATOUT of the belt-type transmission 18, the ratio is a larger value in the 4WD lock mode than it is in the 4WD automatic mode at a given input shaft rotation speed NOUT and output shaft torque TATOUT.

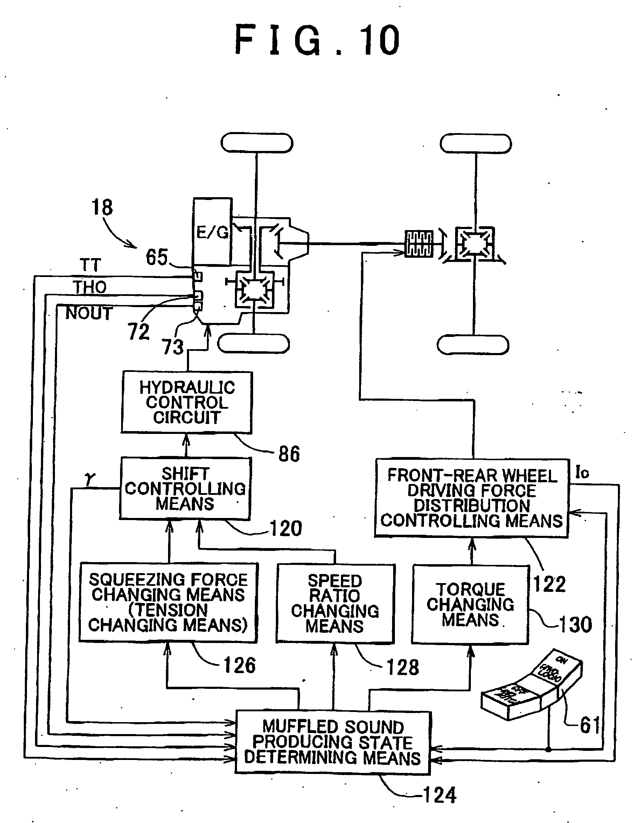

FIG. 10 is a functional block line diagram showing the main control functions of the electronic control apparatus 60 that execute shift control in this example embodiment. Just as in the foregoing example embodiment, the muffled sound determining means 124 determines whether the running state of the vehicle is a state in which a muffled sound may be produced. However, the operation for determining whether the vehicle is in four-wheel drive is different than it is in the foregoing example embodiment. That is, in this example embodiment, the determination of whether the vehicle is in four-wheel drive is made based on the state of the 4WD lock switch 61. In other words, just as described above, when the 4WD lock switch 61 is on, the ratio of driving force transmitted to the rear wheels 57L and 57R to the total driving force output from the belt-type transmission 18 will not be zero so the vehicle is not in two-wheel drive. Accordingly, it is determined that the vehicle is in four-wheel drive when the 4WD lock switch 61 is on.

Also, an example of the control operation in this example embodiment may be illustrated by the flowchart in FIG 9, just as in the foregoing example embodiment. The only difference between the control operation in this example embodiment and the control operation in the foregoing example embodiment is with respect to step SA5 where the muffled sound determining means 124 determines whether the vehicle is in four-wheel drive. That is, in step SA5 in the foregoing example embodiment, it is determined whether the vehicle is in four-wheel drive based on whether the value FWPT of the driving force transmitted from the belt-type transmission 18 to the rear wheels 57L and 57R is exceeding the predetermined value. In contrast, in this example embodiment, it is determined whether the vehicle is in four-wheel drive based on the state of the 4WD lock switch 61, as described above.

According to this example embodiment, the muffled sound determining means 124 determines whether the vehicle is in four-wheel drive based on the state of the 4WD lock switch 61 so the same effect as that obtained by the foregoing example embodiment can be obtained by an even simpler determination.

In the foregoing first example embodiment, the muffled sound determining means 124 determines whether the vehicle is in four-wheel drive based on whether the value FWPT of the driving force transmitted from the belt-type transmission 18 to the rear wheels 57L and 57R is exceeding the predetermined value. Also, in the second example embodiment described above, the muffled sound determining means 124 determines whether the vehicle is in four-wheel drive based on whether the 4WD lock switch 61 is on. However, the invention is not limited to this. For example, these determining methods may be combined. That is, the muffled sound determining means 124 may determine that the vehicle is in four-wheel drive when the value FWPT of the driving force is exceeding the predetermined value and/or when the 4WD lock switch 61 is on. This enables the determination as to whether the vehicle is in four-wheel drive to be made more accurately.

Also, in the foregoing example embodiment, in two-wheel drive the front wheels 24L and 24R are driven and in four-wheel drive both the front wheels 24L and 24R and the rear wheels 57L and 57R are driven, but the invention is not limited to this. For example, in two-wheel drive, the rear wheels 57L and 57R may be driven and in four-wheel drive both the front wheels 24L and 24R and the rear wheels 57L and 57R may be driven.

Further, in the foregoing example embodiment, the engine 12 is provided as the driving force source for running, and the torque converter 14 that transmits the output from the engine 12 through fluid is provided. However, the invention may also be applied to a hybrid vehicle or the like that is provided with another driving force source such as an electric motor. Also, another fluid power transmitting device such as a fluid coupling may be used instead of the torque converter 14.

Moreover, in the foregoing example embodiment, the forward-reverse switching apparatus 16 is formed by a forward clutch C1 and a reverse brake B1 which are hydraulic friction apply devices. Alternatively, however, the forward-reverse switching apparatus 16 may be formed by a plurality of clutches or brakes.

Furthermore, in the foregoing example embodiment, the electromagnetic driving force distribution coupling 54 is used as the driving torque distributing apparatus, but the invention is not limited to this. For example, a hydraulic coupling may also be used. In this case, the front-rear wheel driving force distribution controlling means 122 controls the transfer torque of the hydraulic coupling by controlling the current supplied to a linear solenoid valve provided in a hydraulic control circuit that supplies hydraulic fluid to the hydraulic coupling, for example. Also, a magnetic-particle type coupling in which the binding force of electromagnetic particles that determines the transfer torque is controlled by electromagnetic force may also be used.

Also, in the flowchart shown in FIG. 9 that illustrates the control operation for reducing the muffled sound in the foregoing example embodiment, the determinations in steps SA1 to SA5 are performed based on whether the values of the output shaft rotation speed NOUT of the belt-type transmission 18, the turbine torque TT corresponding to the input torque to the belt-type transmission 18, the hydraulic fluid temperature THO of the belt-type transmission 18, and the speed ratio $\gamma$ of the belt-type transmission 18, as well as the value of the transfer torque to the rear wheel differential gear unit 55, satisfy predetermined requirements. However, the order of these may be different than it is in FIG. 9.

Further, in the foregoing example embodiment, the muffled sound determining means 124 determines whether the vehicle is in a muffled sound producing state based on the values of the output shaft rotation speed NOUT of the belt-type transmission 18, the input torque to the belt-type transmission 18, the hydraulic fluid temperature THO of the belt-type transmission 18, and the speed ratio $\gamma$ of the belt-type transmission 18. However, the indices indicative of the running state of the vehicle used in this determination are not limited to these. For example, the determination may be made using any of a plurality of these, or made using other variables.

Also, in the foregoing example embodiment, the amount of change in the belt squeezing force of the drive belt 48 by the squeezing force changing means 126, the speed ratio $\gamma$ of the belt-type transmission 18 by the speed ratio changing means 128, and the input torque distribution to the rear wheel differential gear unit 55 by the torque changing means 130 is determined so that the running state of the vehicle will not correspond to the muffled sound producing state, for example. However, the invention is not limited to this. For example, a microphone and an acoustic pressure sensor or the like that detect the level of muffled sound may be provided in the vehicle, and the amount of change may be determined based on whether the muffled sound has actually been reduced to a predetermined level.

Also, in the foregoing example embodiment, the 4WD lock switch 61 is a switch that switches on and off, but the invention is not limited to this. For example, the 4WD lock switch 61 may also be a switch that is selectively switched among a 4WD locking state, a 4WD automatic switching state, and a 2WD locking state. That is, the 4WD lock switch 61 is not limited as long as it can selectively switch between a 4WD lock control state and another control state.

In the first example embodiment described above, the muffled sound determining means 124 determines whether the vehicle is in four-wheel drive based on whether the value FWPT of driving force transmitted from the belt-type transmission 18 to the rear wheels 57L and 57R is exceeding the predetermined value. Also, in the second example embodiment, the muffled sound determining means 124 determines whether the vehicle is in four-wheel drive based on the state of the 4WD lock switch 61. However, the invention is not limited to this. For example, both may be monitored and the determination as to whether the vehicle is in four-wheel drive may be made when one of the conditions i) that the value FWPT of driving force transmitted from the belt-type transmission 18 to the rear wheels 57L and 57R be exceeding the predetermined value, and ii) that the 4WD lock switch 61 be in the 4WD lock state, is satisfied.

Also, in the foregoing example embodiment, the belt-type transmission 18 is structured so as to be able to switch speed ratios $\gamma$ continuously in a non-stepped manner, i.e., a continuously variable transmission. However, the invention is not limited to this. For example, the belt-type transmission 18 may also be a stepped transmission that can selectively set each speed ratio $\gamma$ of the belt-type transmission 18 to one of multiple preset speed ratios.

**Claims**

1. A control apparatus for a four-wheel drive vehicle provided with a driving torque distributing apparatus (54) that switches the vehicle between two-wheel drive in which the vehicle is driven by one of a pair of front wheels (24L, 24R) or a pair of rear wheels (57L, 57R) and four-wheel drive in which the vehicle is driven by both the front wheels and the rear wheels, by controlling the distribution of driving torque transmitted through a belt-type transmission (18) to the front wheels and the rear wheels, **characterized by** comprising:

   muffled sound determining means (124) for, when the vehicle has been placed in four-wheel drive by the driving torque distributing apparatus, determining whether the running state of the vehicle is a muffled sound producing state brought about by vibration of a differential gear unit (55) included in a drive-line downstream of the driving torque distributing apparatus due to string vibration of a drive belt of the belt-type transmission; and
   tension changing means (126) for changing the tension on the drive belt when it is determined by the muffled sound determining means that the running state of the vehicle is the muffled sound producing state, compared to when the running state of the vehicle is not the muffled sound producing state.

2. A control apparatus for a four-wheel drive vehicle provided with a driving torque distributing apparatus (54) that switches the vehicle between two-wheel drive in which the vehicle is driven by one of a pair of front wheels (24L, 24R) or a pair of rear wheels (57L, 57R) and four-wheel drive in which the vehicle is driven by both the front wheels and the rear wheels, by controlling the distribution of driving torque transmitted through a belt-type transmission (18) to the front wheels and the rear wheels, **characterized by** comprising:

   muffled sound determining means (124) for, when the vehicle has been placed in four-wheel drive by the driving torque distributing apparatus, determining whether the running state of the vehicle is a muffled sound producing state brought about by vibration of a differential gear unit (55) included in a drive-line downstream of the driving torque distributing apparatus due to string vibration of a drive belt of the belt-type transmission; and
   speed ratio changing means (128) for changing the speed ratio of the belt-type transmission when it is determined by the muffled sound determining means that the running state of the vehicle is the muffled sound producing state, compared to when the running state of the vehicle is not the muffled sound producing state.

3. The control apparatus according to any one of claims 1 to 2, wherein the muffled sound determining means determines whether the running state of the vehicle is the muffled sound producing state based on whether a value related to the speed of the vehicle and a value of the speed ratio of the belt-type transmission is each within a respective preset range.

4. The control apparatus according to claim 3, wherein the value related to the speed of the vehicle is an output shaft rotation speed of the belt-type transmission.

5. The control apparatus according to any one of claims 1 to 4, wherein the determining means determines whether the running state of the vehicle is the muffled sound producing state based on whether an input torque to the belt type transmission is within a preset range.

6. The control apparatus according to any one of claims 1 to 5, wherein the determining means determines whether the running state of the vehicle is the muffled sound producing state based on whether a hydraulic fluid temperature of the belt-type transmission is within a preset range.

7. The control apparatus according to any one of claims 1 to 6, wherein the muffled sound determining means determines that the running state of the vehicle is not the muffled sound producing state when a value related to the torque transmitted to the differential gear unit by the driving force torque distributing apparatus is below a predetermined reference torque.

8. The control apparatus according to claim 7, wherein the vehicle has a four-wheel drive lock switch for locking the driving torque distributing apparatus in a four-wheel drive, and the muffled sound determining means determines that the running state of the vehicle is not the muffled sound producing state when the four-wheel drive lock switch is off and the value related to the torque transmitted to the differential gear unit is below a predetermined reference torque.

9. A control method for a four-wheel drive vehicle provided with a driving torque distributing apparatus (54) that switches the vehicle between two-wheel drive in which the vehicle is driven by one of a pair of front wheels (24L, 24R) or a pair of rear wheels (57L, 57R) and four-wheel drive in which the vehicle is driven by both the front wheels and the rear wheels, by controlling the distribution of driving torque transmitted through a belt-type transmission (18) to the front wheels and the rear wheels, **characterized by** comprising:

   determining whether the running state of the vehicle is a muffled sound producing state brought about by vibration of a differential gear unit (55) included in a drive-line downstream of the driving torque distributing apparatus due to string vibration of a drive belt of the belt-type transmission, when the vehicle has been placed in four-wheel drive by the driving torque distributing apparatus; and
   changing the tension on the drive belt when it is determined that the running state of the vehicle is the muffled sound producing state, compared to when the running state of the vehicle is not the muffled sound producing state.

10. A control method for a four-wheel drive vehicle provided with a driving torque distributing apparatus (54) that switches the vehicle between two-wheel drive in which the vehicle is driven by one of a pair of front wheels (24L, 24R) or a pair of rear wheels (57L, 57R) and four-wheel drive in which the vehicle is driven by both the front wheels and the rear wheels, by controlling the distribution of driving torque transmitted through a belt-type transmission (18) to the front wheels and the rear wheels, **characterized by** comprising:

   determining whether the running state of the vehicle is a muffled sound producing state brought about by vibration of a differential gear unit (55) included in a drive-line downstream of the driving torque distributing apparatus due to string vibration of a drive belt of the belt-type transmission, when the vehicle has been placed in four-wheel drive by the driving torque distributing apparatus; and
   changing the speed ratio of the belt-type transmission when it is determined that the running state of the vehicle is the muffled sound producing state, compared to when the running state of the vehicle is not the muffled sound producing state.

**Patentansprüche**

1. Steuervorrichtung für ein Fahrzeug mit Vierradantrieb, das mit einer Antriebsmomentverteilvorrichtung (54) versehen ist, die das Fahrzeug zwischen einem Zweiradantrieb, bei dem das Fahrzeug durch ein Paar an Vorderrädern (24L, 24R) oder ein Paar an Hinterrädern (57L, 57R) angetrieben wird, und einem Vierradantrieb, bei dem das Fahrzeug durch sowohl die Vorderräder als auch die Hinterräder angetrieben wird, schaltet, indem die Verteilung des Antriebsmomentes gesteuert wird, das durch ein Getriebe (18) der Riemenart zu den Vorderrädern und den Hinterrädern übertragen wird, **dadurch gekennzeichnet, dass** sie folgendes aufweist:

   eine Dumpfklangbestimmungseinrichtung (124) zum - wenn das Fahrzeug durch die Antriebsmomentverteilvorrichtung in den Vierradantrieb versetzt worden ist - Bestimmen, ob der Fahrzustand des Fahrzeuges ein Zustand ist, bei dem ein dumpfer Klang erzeugt wird, der durch ein Schwingen einer Differenzialgetriebeeinheit (55), die in einer Antriebslinie stromabwärtig der Antriebsmomentverteilvorrichtung umfasst ist, aufgrund einer Strangschwingung eines Antriebsriemens des Getriebes der Riemenart mit sich gebracht wird; und
   eine Spannungsänderungseinrichtung (126) zum Ändern der Spannung an dem Riemen, wenn durch die Dumpfklangbestimmungseinrichtung bestimmt wird, dass der Fahrzustand des Fahrzeugs der Zustand ist, bei dem ein dumpfer Klang erzeugt wird, im Vergleich zu dem Fall, bei dem der Fahrzustand des Fahrzeugs nicht der Zustand ist, bei dem ein dumpfer Klang erzeugt wird.

2. Steuervorrichtung für ein Fahrzeug mit Vierradantrieb, das mit einer Antriebsmomentverteilvorrichtung (54) versehen ist, die das Fahrzeug zwischen einem Zweiradantrieb, bei dem das Fahrzeug durch ein Paar an Vorderrädern (24L, 24R) oder ein Paar an Hinterrädern (57L, 57R) angetrieben wird, und einem Vierradantrieb, bei dem das Fahrzeug durch sowohl die Vorderräder als auch die Hinterräder angetrieben wird, schaltet, indem die Verteilung eines Antriebsmomentes gesteuert wird, das durch ein Getriebe (18) der Riemenart zu den Vorderrädern und den Hinterrädern übertragen wird, **dadurch gekennzeichnet, dass** sie folgendes aufweist:

    eine Dumpfklangbestimmungseinrichtung (124) zum - wenn das Fahrzeug durch die Antriebsmomentverteilvorrichtung in den Vierradantrieb versetzt worden ist - Bestimmen, ob der Fahrzustand des Fahrzeugs ein Zustand ist, bei dem ein dumpfer Klang erzeugt wird, der durch eine Schwingung einer Differenzialgetriebeeinheit (55), die in einer Antriebslinie stromabwärts der Antriebsmomentverteilvorrichtung umfasst ist, aufgrund einer Strangschwingung eines Antriebsriemens des Getriebes der Riemenart mit sich gebracht wird; und
    einer Übersetzungsverhältnisänderungseinrichtung (128) zum Ändern des Übersetzungsverhältnisses des Getriebes der Riemenart, wenn durch die Dumpfklangbestimmungseinrichtung bestimmt wird, dass der Fahrzustand des Fahrzeugs der Zustand ist, bei dem ein dumpfer Klang erzeugt wird, im Vergleich zu dem Fall, bei dem der Fahrzustand des Fahrzeugs nicht der Zustand ist, bei dem ein dumpfer Klang erzeugt wird.

3. Steuervorrichtung gemäß einem der Ansprüche 1 oder 2, wobei die Dumpfklangbestimmungseinrichtung bestimmt, ob der Fahrzustand des Fahrzeugs der Zustand ist, bei dem ein dumpfer Klang erzeugt wird, auf der Grundlage davon, ob ein Wert, der sich auf die Geschwindigkeit des Fahrzeugs bezieht, und ein Wert des Übersetzungsverhältnisses des Getriebes der Riemenart jeweils innerhalb eines zuvor festgelegten Bereiches ist.

4. Steuervorrichtung gemäß Anspruch 3, wobei der Wert, der sich auf die Geschwindigkeit des Fahrzeugs bezieht, eine Drehzahl einer Abgabewelle des Getriebes der Riemenart ist.

5. Steuervorrichtung gemäß einem der Ansprüche 1 bis 4, wobei die Bestimmungseinrichtung bestimmt, ob der Fahrzustand des Fahrzeugs der Zustand ist, bei dem ein dumpfer Klang erzeugt wird, auf der Grundlage davon, ob ein Eingangsmoment des Getriebes der Riemenart innerhalb eines zuvor festgelegten Bereiches ist.

6. Steuervorrichtung gemäß einem der Ansprüche 1 bis 5, wobei die Bestimmungseinrichtung bestimmt, ob der Fahrzustand des Fahrzeugs der Zustand ist, bei dem ein dumpfer Klang erzeugt wird, auf der Grundlage davon, ob eine Hydraulikfluidtemperatur des Getriebes der Riemenart innerhalb eines zuvor festgelegten Bereiches ist.

7. Steuervorrichtung gemäß einem der Ansprüche 1 bis 6, wobei die Dumpfklangbestimmungseinrichtung bestimmt, dass der Fahrzustand des Fahrzeugs nicht der Zustand ist, bei dem ein dumpfer Klang erzeugt wird, wenn ein Wert, der sich auf das Moment bezieht, das zu der Differenzialgetriebeeinheit durch die Antriebskraftmomentverteilvorrichtung übertragen wird, unterhalb eines vorbestimmten Referenzmomentes ist.

8. Steuervorrichtung gemäß Anspruch 7, wobei das Fahrzeug einen Vierradantriebsarretierschalter hat zum Arretieren der Antriebsmomentverteilvorrichtung in einem Vierradantrieb, und die Dumpfklangbestimmungseinrichtung bestimmt, dass der Fahrzustand des Fahrzeugs nicht der Zustand ist, bei dem ein dumpfer Klang erzeugt wird, wenn der Vierradantriebsarretierschalter ausgeschaltet ist und der Wert, der sich auf das Moment bezieht, das zu der Differenzialgetriebeeinheit übertragen wird, unterhalb eines vorbestimmten Referenzmomentes ist.

9. Steuerverfahren für ein Fahrzeug mit Vierradantrieb, das mit einer Antriebsmomentverteilvorrichtung (54) versehen ist, die das Fahrzeug zwischen einem Zweiradantrieb, bei dem das Fahrzeug durch ein Paar an Vorderrädern (24L, 24R) oder ein Paar an Hinterrädern (57L, 57R) angetrieben wird, und einem Vierradantrieb, bei dem das Fahrzeug durch sowohl die Vorderräder als auch die Hinterräder angetrieben wird, schaltet, durch ein Steuern der Verteilung eines Antriebsmomentes, das durch ein Getriebe (18) der Riemenart zu den Vorderrädern und den Hinterrädern übertragen wird, **gekennzeichnet durch** die folgenden Schritte:

    Bestimmen, ob der Fahrzustand des Fahrzeugs ein Zustand ist, bei dem ein dumpfer Klang erzeugt wird, der **durch** ein Schwingen einer Differenzialgetriebeeinheit (55), die in einer Antriebslinie stromabwärts der Antriebsmomentverteilvorrichtung umfasst ist, aufgrund einer Strangschwingung eines Antriebsriemens des Getriebes der Riemenart mit sich gebracht wird, wenn das Fahrzeug **durch** die Antriebsmomentverteilvorrichtung in den Vierradantrieb versetzt worden ist; und

Ändern der Spannung im Antriebsriemen, wenn bestimmt wird, dass der Fahrzustand des Fahrzeugs der Zustand ist, bei dem ein dumpfer Klang erzeugt wird, im Vergleich zu dem Fall, bei dem der Fahrzustand des Fahrzeugs nicht der Zustand ist, bei dem ein dumpfer Klang erzeugt wird.

10. Steuerverfahren für ein Fahrzeug mit Vierradantrieb, das mit einer Antriebsmomentverteilvorrichtung (54) versehen ist, die das Fahrzeug zwischen einem Zweiradantrieb, bei dem das Fahrzeug durch ein Paar an Vorderrädern (24L, 24R) oder ein Paar an Hinterrädern (57L, 57R) angetrieben wird, und einem Vierradantrieb, bei dem das Fahrzeug durch sowohl die Vorderräder als auch die Hinterräder angetrieben wird, schaltet, durch ein Steuern der Verteilung eines Antriebsmomentes, das durch ein Getriebe (18) der Riemenart zu den Vorderräder und den Hinterrädern übertragen wird, **gekennzeichnet durch** die folgenden Schritte:

Bestimmen, ob der Fahrzustand des Fahrzeugs ein Zustand ist, bei dem ein dumpfer Klang erzeugt wird, der **durch** ein Schwingen einer Differenzialgetriebeeinheit (55), die in einer Antriebslinie stromabwärts der Antriebsmomentverteilvorrichtung umfasst ist, aufgrund einer Strangschwingung eines Antriebsriemens des Getriebes der Riemenart mit sich gebracht wird, wenn das Fahrzeug **durch** die Antriebsmomentverteilvorrichtung in den Vierradantrieb versetzt worden ist; und

Ändern des Übersetzungsverhältnisses des Getriebes der Riemenart, wenn bestimmt wird, dass der Fahrzustand des Fahrzeugs der Zustand ist, bei dem ein dumpfer Klang erzeugt wird, im Vergleich zu dem Fall, bei dem der Fahrzustand des Fahrzeugs nicht der Zustand ist, bei dem ein dumpfer Klang erzeugt wird.

**Revendications**

1. Appareil de commande pour un véhicule à quatre roues motrices pourvu d'un appareil (54) de distribution de couple moteur qui fait basculer le véhicule entre un entraînement à deux roues dans lequel le véhicule est entraîné par l'une d'une paire de roues avant (24L, 24R) ou d'une paire de roues arrière (57L, 57R) et un entraînement à quatre roues dans lequel le véhicule est un entraîné à la fois par les roues avant et les roues arrière, en commandant la distribution du couple moteur transmis à travers une transmission du type à courroie (18) aux roues avant et aux roues arrière, **caractérisé par** le fait de comprendre :

un moyen (124) de détermination de bruit sourd pour déterminer, lorsque le véhicule a été mis en entraînement à quatre roues par l'appareil de distribution de couple moteur, si l'état de marche du véhicule est un état de production de bruit sourd provoqué par des vibrations d'une unité (55) d'engrenage différentiel comprise dans une chaîne cinématique en aval de l'appareil de distribution de couple moteur à cause des vibrations de cordes d'une courroie d'entraînement de la transmission du type à courroie ; et

un moyen (126) de changement de tension pour changer la tension sur la courroie d'entraînement lorsqu'il est déterminé par le moyen de détermination de bruit sourd que l'état de marche du véhicule est l'état de production de bruit sourd, en comparaison avec l'état de marche du véhicule lorsqu'il n'est pas un état de production de bruit sourd.

2. Appareil de commande pour un véhicule à quatre roues motrices pourvu d'un appareil (54) de distribution de couple moteur qui fait basculer le véhicule entre un entraînement à deux roues dans lequel le véhicule est entraîné par l'une d'une paire de roues avant (24L, 24R) ou d'une paire de roues arrière (57L, 57R) et un entraînement à quatre roues dans lequel le véhicule est entraîné à la fois par les roues avant et les roues arrière, en commandant la distribution du couple moteur transmis à travers une transmission du type à courroie (18) aux roues avant et aux roues arrière, **caractérisé par** le fait de comprendre :

un moyen (124) de détermination bruit de sourd pour déterminer, lorsque le véhicule a été mis en entraînement à quatre roues par l'appareil de distribution de couple moteur, si l'état de marche du véhicule est un état de production de bruit sourd provoqué par des vibrations d'une unité (55) d'engrenage différentiel comprise dans une chaîne cinématique en aval de l'appareil de distribution de couple moteur à cause des vibrations de cordes d'une courroie d'entraînement de la transmission du type à courroie ; et

un moyen (128) de changement de rapport de vitesse pour changer le rapport de vitesse de la transmission du type à courroie lorsqu'il est déterminé par le moyen de détermination de bruit sourd que l'état de marche du véhicule est l'état de production de bruit sourd, en comparaison avec l'état de marche du véhicule lorsqu'il n'est pas l'état de production de bruit sourd.

3. Appareil de commande selon l'une quelconque des revendications 1 à 2, dans lequel le moyen de détermination de bruit sourd détermine si l'état de marche du véhicule est l'état de production de bruit sourd selon qu'une valeur relative à la vitesse du véhicule et qu'une valeur du rapport de vitesse de la transmission du type à courroie soit chacune dans une plage préétablie respective ou non.

4. Appareil de commande selon la revendication 3, dans lequel la valeur relative à la vitesse du véhicule est une vitesse de rotation d'arbre de sortie de la transmission du type à courroie.

5. Appareil de commande selon l'une quelconque des revendications 1 à 4, dans lequel le moyen de détermination détermine si l'état de marche du véhicule est l'état de production de bruit sourd selon qu'un couple d'entrée à la transmission du type à courroie soit dans une plage préétablie ou non.

6. Appareil de commande selon l'une quelconque des revendications 1 à 5, dans lequel le moyen de détermination détermine si l'état de marche du véhicule est l'état de production de bruit sourd selon qu'une température de fluide hydraulique de la transmission du type à courroie se trouve dans une plage préétablie ou non.

7. Appareil de commande selon l'une quelconque des revendications 1 à 6, dans lequel le moyen de détermination de bruit sourd détermine que l'état de marche du véhicule n'est pas l'état de production de bruit sourd lorsqu'une valeur relative au couple transmis à l'unité d'engrenage différentiel par l'appareil de distribution de couple de force d'entraînement est en-dessous d'un couple de référence prédéterminé.

8. Appareil de commande selon la revendication 7, dans lequel le véhicule possède un contacteur de verrouillage à quatre roues motrices pour verrouiller l'appareil de distribution de couple moteur dans un entraînement à quatre roues, et le moyen de détermination de bruit sourd détermine que l'état de marche du véhicule n'est pas l'état de production de bruit sourd lorsque le contacteur de verrouillage à quatre roues motrices est en position d'arrêt et la valeur relative au couple transmis à l'unité d'engrenage différentiel est en-dessous d'un couple de référence prédéterminé.

9. Procédé de commande pour un véhicule à quatre roues motrices pourvu d'un appareil (54) de distribution de couple moteur qui fait basculer le véhicule entre un entraînement à deux roues dans lequel le véhicule est entraîné par l'une d'une paire de roues avant (24L, 24R) ou d'une paire de roues arrière (57L, 57R) et un entraînement à quatre roues dans lequel le véhicule est un entraîné à la fois par les roues avant et les roues arrière, en commandant la distribution du couple moteur transmis à travers une transmission du type à courroie (18) aux roues avant et aux roues arrière, **caractérisé par** le fait de :

déterminer si l'état de marche du véhicule est un état de production de bruit sourd provoqué par des vibrations d'une unité (55) d'engrenage différentiel comprise dans une chaîne cinématique en aval de l'appareil de distribution de couple moteur à cause des vibrations de cordes d'une courroie d'entraînement de la transmission du type à courroie ; lorsque le véhicule a été mis en entraînement à quatre roues par l'appareil de distribution de couple moteur ; et changer la tension sur la courroie d'entraînement lorsqu'il est déterminé que l'état de marche du véhicule est l'état de production de bruit sourd, en comparaison avec l'état de marche du véhicule lorsqu'il n'est pas l'état de production de bruit sourd.

10. Procédé de commande pour un véhicule à quatre roues motrices pourvu d'un appareil (54) de distribution de couple moteur qui fait basculer le véhicule entre un entraînement à deux roues dans lequel le véhicule est entraîné par l'une d'une paire de roues avant (24L, 24R) ou d'une paire de roues arrière (57L, 57R) et un entraînement à quatre roues dans lequel le véhicule est entraîné à la fois par les roues avant et les roues arrière, en commandant la distribution du couple moteur transmis à travers une transmission du type à courroie (18) aux roues avant et aux roues arrière, **caractérisé par** le fait de :

déterminer si l'état de marche du véhicule est un état de production de bruit sourd provoqué par des vibrations d'une unité (55) d'engrenage différentiel comprise dans une chaîne cinématique en aval de l'appareil de distribution de couple moteur à cause des vibrations de cordes d'une courroie d'entraînement de la transmission du type à courroie ; lorsque le véhicule a été mis en entraînement à quatre roues par l'appareil de distribution de couple moteur ; et changer le rapport de vitesse de la transmission du type à courroie lorsqu'il est déterminé que l'état de marche du véhicule est l'état de production de bruit sourd, en comparaison avec l'état de marche du véhicule lorsqu'il n'est pas l'état de production de bruit sourd.

# FIG.1

# FIG.2

```
                                                              ┌ 60
IGNITION SWITCH ────────►┌──────────────┐        ┌──────────────────┐
                         │              │───────►│    ELECTRONIC     │ 80
62  ENGINE          NE   │              │        │  THROTTLE VALVE   │
    SPEED SENSOR ───────►│              │        └──────────────────┘
64  TURBINE         NT   │              │        ┌──────────────────┐ 82
    SPEED SENSOR ───────►│              │───────►│  FUEL INJECTION   │
65  TURBINE         TT   │  ELECTRONIC  │        │      DEVICE       │
    TORQUE SENSOR ──────►│   CONTROL    │        └──────────────────┘
                         │  APPARATUS   │        ┌──────────────────┐ 84
                         │              │───────►│     IGNITION      │
68  THROTTLE       θTH   │              │        │      DEVICE       │
    SENSOR ─────────────►│              │        └──────────────────┘
70  COOLANT         Tw   │              │
    TEMPERATURE ───────►│              │
    SENSOR             │              │
72  CVT FLUID      THO   │              │        ┌──────────────────┐ 86
    TEMPERATURE ───────►│              │───────►│     HYDRAULIC     │
    SENSOR             │              │        │  CONTROL CIRCUIT  │
66  CVT OUTPUT    Nout   │              │        └──────────────────┘
    SHAFT ROTATION ────►│              │        ┌──────────────────┐ 110s
    SPEED SENSOR       │              │        │     HYDRAULIC     │
74  ACCELERATOR    Acc   │              │◄───────│  PRESSUR SENSOR   │
    OPERATION ────────►│              │        └──────────────────┘
    AMOUNT SENSOR     │              │
76  FOOT               │              │
    BRAKE SWITCH ─────►│              │
78  LEVER POSITION Psh  │              │
    SENSOR ───────────►│              │
        77             │              │        ┌──────────────────┐ 54
79  LONGITUDINAL       │              │───────►│  ELECTRONICALLY   │
    G SENSOR ─────────►│              │        │    CONTROLLED     │
61  4WD                │              │        │     COUPLING      │
    LOCK SWITCH ──────►└──────────────┘        └──────────────────┘
```

# FIG.3

EP 2 090 454 B1

FIG.4

TARGET
ROTATION
SPEED
$N_{IN*}$

$\gamma_{max}$

Aco
100%
80%
60%
40%
20%
0%

$\gamma_{min}$

VEHICLE SPEED V

FIG.5

NECESSARY PRESSURE
(BELT SQUEEZING FORCE)

LARGE
Aco
SMALL

SPEED RATIO $\gamma$

23

# FIG.6

# FIG.7

# FIG.8

TT

THO

NOUT

E/G

18

65

72 73 22

HYDRAULIC CONTROL CIRCUIT

86

γ SHIFT CONTROLLING MEANS

120

FRONT-REAR WHEEL DRIVING FORCE DISTRIBUTION CONTROLLING MEANS

Io

122

SQUEEZING FORCE CHANGING MEANS (TENSION CHANGING MEANS)

126

SPEED RATIO CHANGING MEANS

128

TORQUE CHANGING MEANS

130

MUFFLED SOUND PRODUCING STATE DETERMINING MEANS

124

# FIG.9

START

SA1

OUTPUT
NOUT4WDL ≤ SHAFT ROTATION ≤ NOUT4WDH ?
SPEED NOUT

NO

YES

SA2

TURBINE TORQUE TT ≥ TTPUP4WD ?

NO

YES

SA3

CVT FLUID
THOPUP4WDH ≤ TEMPERATURE ≤ THOPUP4WDL ?
THO

NO

YES

SA4

SPEED RATIO $\gamma$ ≥ RTOUP4WD ?

NO

YES

SA5

4WD REAR
DIFFERENTIAL
TRANSFER TORQUE   ≥ FWPT4WD ?
FWPT

NO

SA6

YES

EXECUTE CONTROL TO REDUCE
STRING VIBRATION OF DRIVE BELT

END

# FIG.10

**EP 2 090 454 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006220259 A